# EUROPEAN PATENT SPECIFICATION

(11) **EP 4 340 254 B1**
(45) Date of publication and mention of the grant of the patent: **28.10.2026**
(21) Application number: 21941992.6
(22) Date of filing: 02.08.2021
(51) Int. Cl.: H04B 10/27, H04B 10/077, H04J 14/02, H04Q 11/00

(54) **COMMUNICATION METHOD AND COMMUNICATION SYSTEM**
KOMMUNIKATIONSVERFAHREN UND KOMMUNIKATIONSSYSTEM
PROCÉDÉ DE COMMUNICATION ET SYSTÈME DE COMMUNICATION

(30) Priority: 10.05.2021 WO PCT/JP2021/017700
(43) Date of publication of application: 20.03.2024
(73) Proprietor: NTT, Inc., Tokyo 100-8116 (JP)
(72) Inventor: SENOO Yumiko, Musashino-shi, Tokyo 180-8585 (JP); HARA Kazutaka, Musashino-shi, Tokyo 180-8585 (JP); KANEKO Shin, Musashino-shi, Tokyo 180-8585 (JP); KANAI Takuya, Musashino-shi, Tokyo 180-8585 (JP); HONDA Kazuaki, Musashino-shi, Tokyo 180-8585 (JP); KANI Junichi, Musashino-shi, Tokyo 180-8585 (JP)
(74) Representative: Santarelli
(86) International application number: PCT/JP2021/028605
(87) International publication number: WO 2022/239263

(56) References cited:
- WO-A1-2021/131202
- US-A1- 2016 255 426
- US-B2- 9 151 903
- ALPARSLAN ONUR ET AL: "Dynamic wavelength allocation and analytical model for flow assignment in optical packet and path integrated networks", JOURNAL OF OPTICAL COMMUNICATIONS AND NETWORKING, IEEE, USA, vol. 9, no. 4, 1 April 2017 (2017-04-01), pages 304 - 318, XP011646002, ISSN: 1943-0620, [retrieved on 20170414], DOI: 10.1364/JOCN.9.000304
- YOSHIDA TOMOAKI: " Photonic Gateway and optical access technology that support APN", NTT TECHNICAL JOURNAL, NIPPON TELEGRAPH AND TELEPHONE CORP, vol. 33, no. 2, 1 February 2021 (2021-02-01), pages 36 - 41, XP093005809
- YOSHIDA TOMOAKI: " 3 Optical Access with Photonic Gateway-Photonic Gateway and Optical Access Technology Supporting APN", BUSINESS COMMUNICATION, NIPPON TELEGRAPH AND TELEPHONE CORP., vol. 57, no. 10, 6 October 2020 (2020-10-06), pages 16 - 17, XP093005813

## Description

### [Technical Field]

The present invention relates to a technology of a communication method and a communication system. This application claims priority based on PCT/JP2021/017700 filed on May 10, 2021.

### [Background Art]

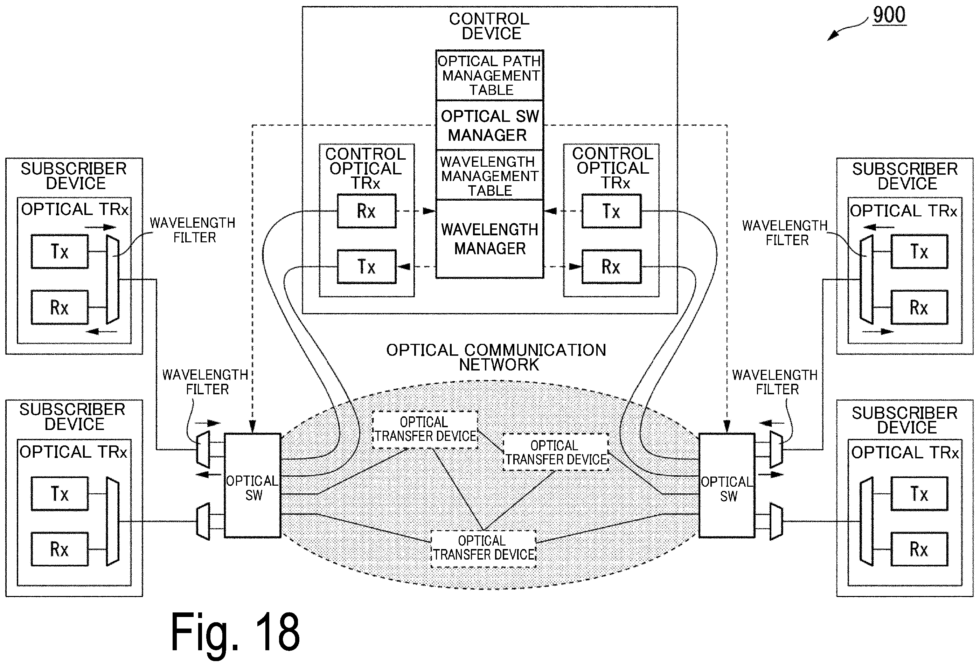

Fig. 18 is a diagram showing a configuration example of a conventional optical communication system 900. The optical communication system 900 has a plurality of optical SWs (switches). In Fig. 18, only two optical SWs are shown, but the number of optical SWs is arbitrary. The optical SW is connected to a control device. A subscriber device communicates with other subscriber devices via an optical communication network. For example, a WDM (Wavelength Division Multiplexing) network or the like including various topology can be applied to the optical communication network. One or more subscriber devices are connected to the optical SW. The subscriber device is connected to the optical SW by an optical access network such as a PON (Passive Optical Network). The subscriber device includes an optical transceiver (TRx). The optical TRx is an example of a configuration of an optical transmitter and an optical receiver in the subscriber device. The optical TRx has an optical transmitter (Tx) and an optical receiver (Rx). The optical TRx is a wavelength variable optical transceiver. As the optical TRx, for example, a conventional optical TRx with an AMCC (Auxiliary Management and Control Channel) function can be used.

The control device has a control optical TRx. The control optical TRx is an example of a configuration of an optical transmitter and an optical receiver in the control device. The control optical TRx has an optical transmitter (Tx) and an optical receiver (Rx). The control optical TRx is a variable wavelength optical transceiver. The control device stores a wavelength management table. The wavelength management table is data indicating the wavelength allocated to each subscriber device. The control device allocates a wavelength used for communication to each subscriber device in response to a destination by using the AMCC function.

In order to allocate the wavelength corresponding to a destination to the subscriber device, first, the optical TRx of the subscriber device and the control optical TRx of the control device perform communication by using the AMCC. The control device refers to the wavelength table and selects a wavelength to be allocated to the subscriber device in response to the destination from among free wavelengths. The control device notifies the subscriber device of the selected wavelength by a control signal using AMCC.

Further, the control device stores an optical path management table. The optical path management table is data indicating a path (optical path) in an optical communication network used for communication by each subscriber device. The control device switches the optical SW so as to perform routing in accordance with the destination indicated by the wavelength of the optical signal transmitted from the subscriber device after setting the wavelength. Thus, each subscriber device is connected to an opposite subscriber device by a designated optical path.

### [Citation List]

Patent application US2016/255426A1 relates to the field of optical switching nodes for use in an optical network. The switching nodes automatically participate in the end-to-end establishment of data connections using dynamically assigned wavelengths, which improves overall bandwidth efficiency of the optical network and provides more flexible protection switching, which no longer requires the input and output wavelengths to be identical.

Document "Dynamic wavelength allocation and analytical model for flow assignment in optical packet and path integrated networks", Alparslan Onur et al., relates to a hybrid optical architecture combining path and packet switching.

### [Non Patent Literature]

[NPL 1] Takuya Kanai, and 6 others, "Photonic Gateway for All-Photonics Network", The 2021 IEICE General Conference

### [Summary of Invention]

### [Technical Problem]

However, in the conventional optical communication system 900, when the optical path is opened once between the subscriber devices, the optical path cannot be switched in response to the request of the subscriber devices. Such a problem is common to all information equipment (e.g., subscriber devices) connected to the optical SW.
In view of the above circumstances, an object of the present invention is to provide a technology in which an optical path between information equipment be changed in response to an operation of information equipment connected to an optical SW.

### [Solution to Problem][0008]

The invention is set out in the appended set of claims.

### [Advantageous Effects of Invention]

According to the present invention, the optical path between the information equipment can be changed in response to the operation of the information equipment connected to the optical SW.

### [Brief Description of Drawings]

[Fig.1]

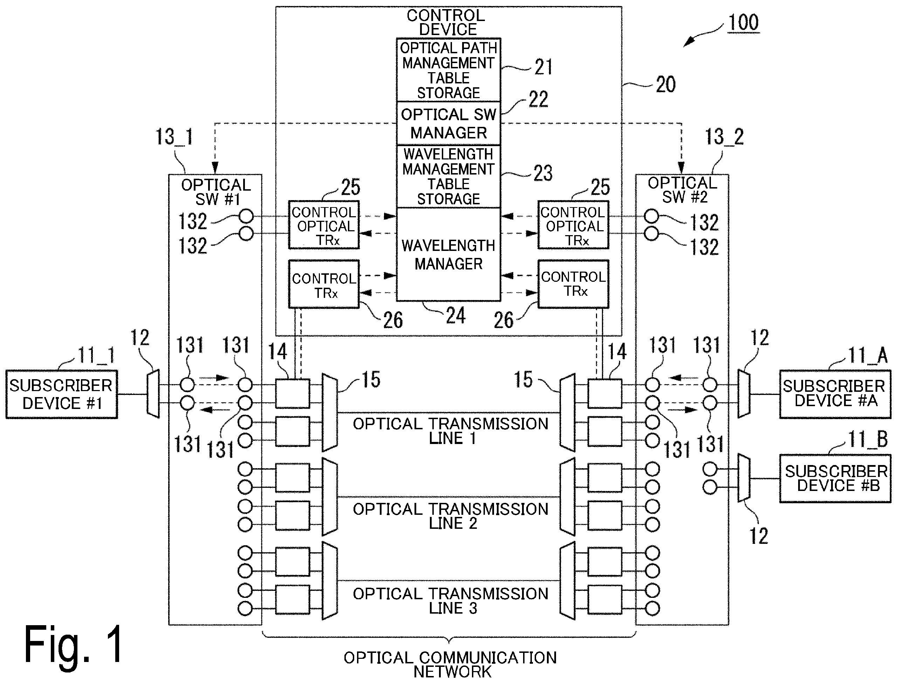

   Fig. 1 is a diagram showing a system configuration example (a first embodiment) of a communication system 100 of the present invention.
[Fig. 2]

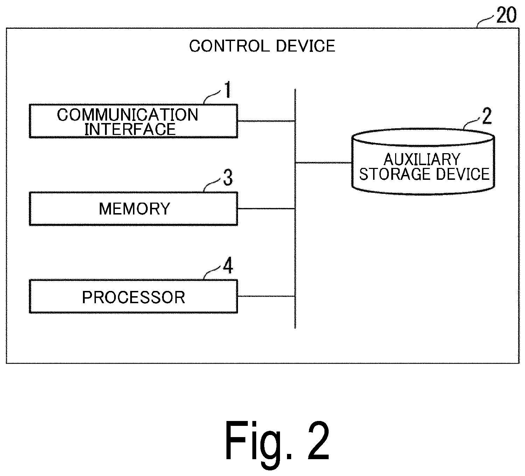

   Fig. 2 is a diagram showing a concrete example of a hardware configuration of a control device 20.
[Fig. 3]

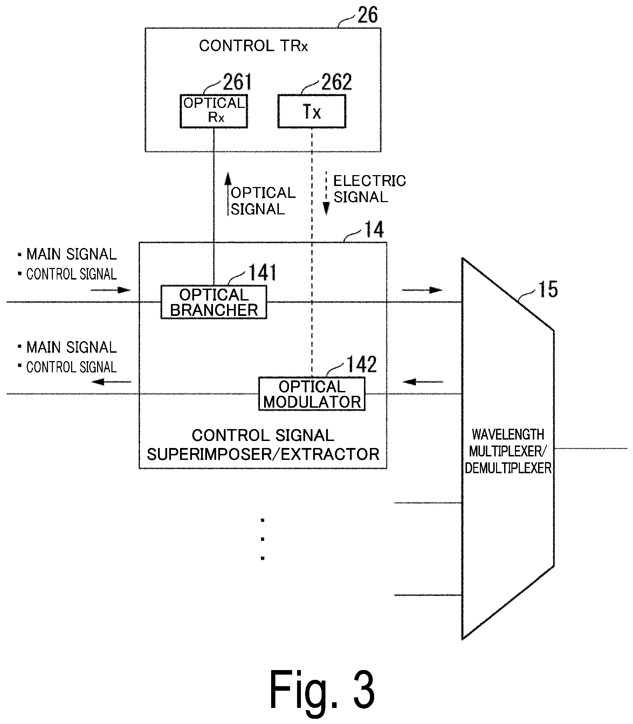

   Fig. 3 is a diagram showing a concrete example of a configuration example of a control signal superimposer/extractor 14 and a control TRx 26.
[Fig. 4]

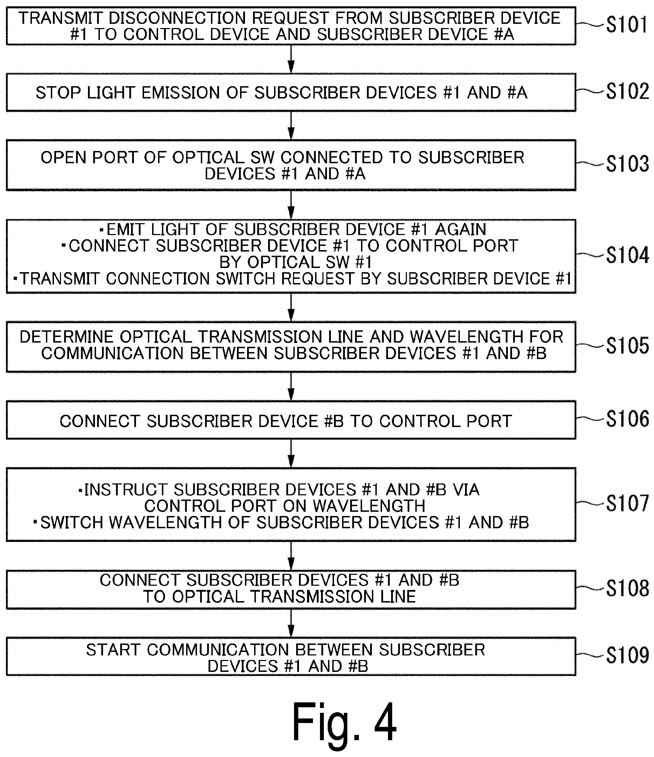

   Fig. 4 is a flowchart showing a concrete example (a first operation example) of an operation of the communication system 100 according to the first embodiment.
[Fig. 5]

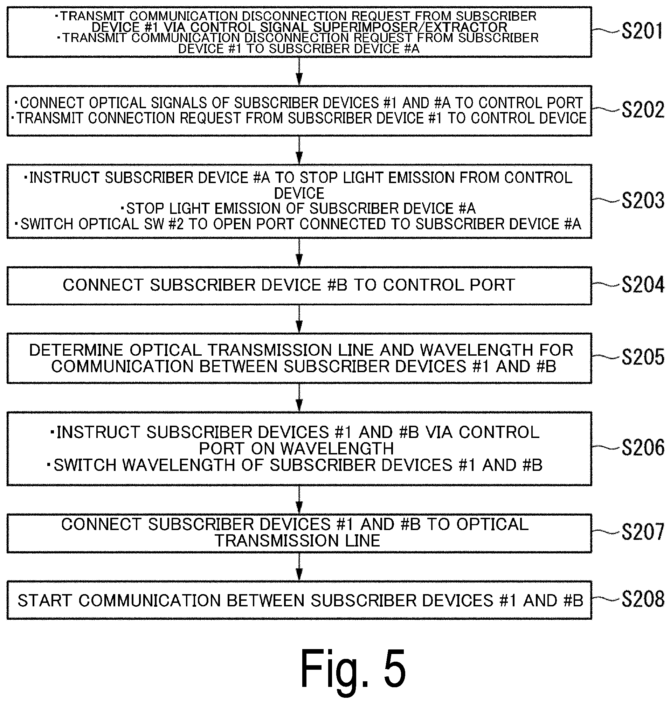

   Fig. 5 is a flowchart showing a concrete example (a second operation example) an operation of the communication system 100 according to the first embodiment.
[Fig. 6]

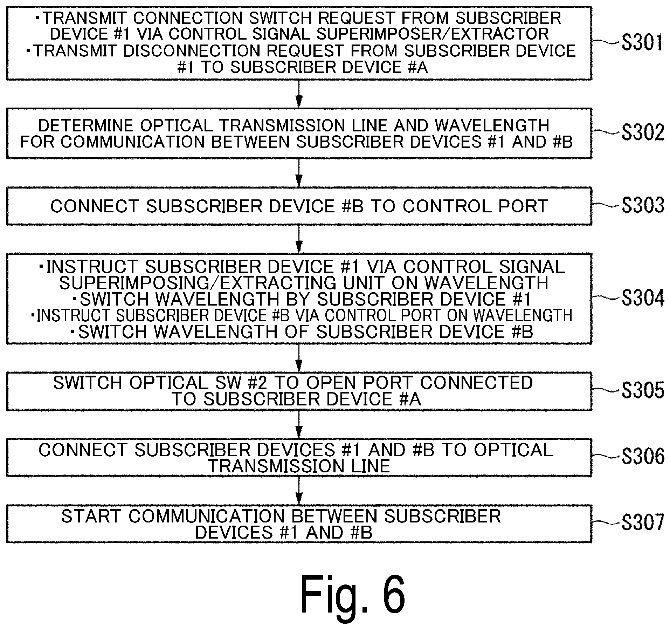

   Fig. 6 is a flowchart showing a concrete example (a third operation example) of an operation of the communication system 100 according to the first embodiment.
[Fig. 7]

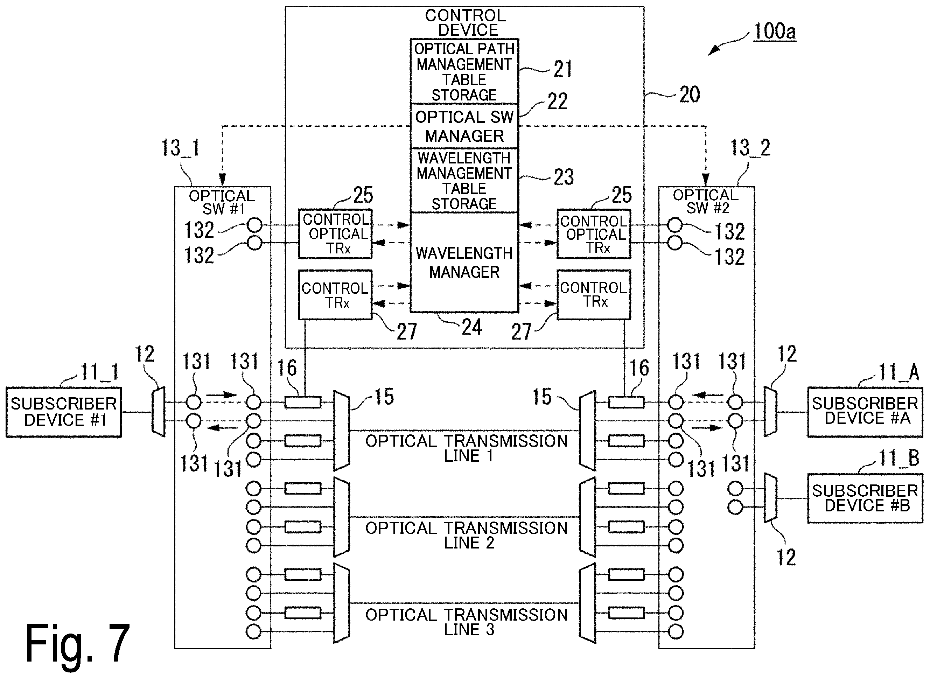

   Fig. 7 is a diagram showing a system configuration of a modification example (a communication system 100a) of a communication system according to the first embodiment.
[Fig. 8]

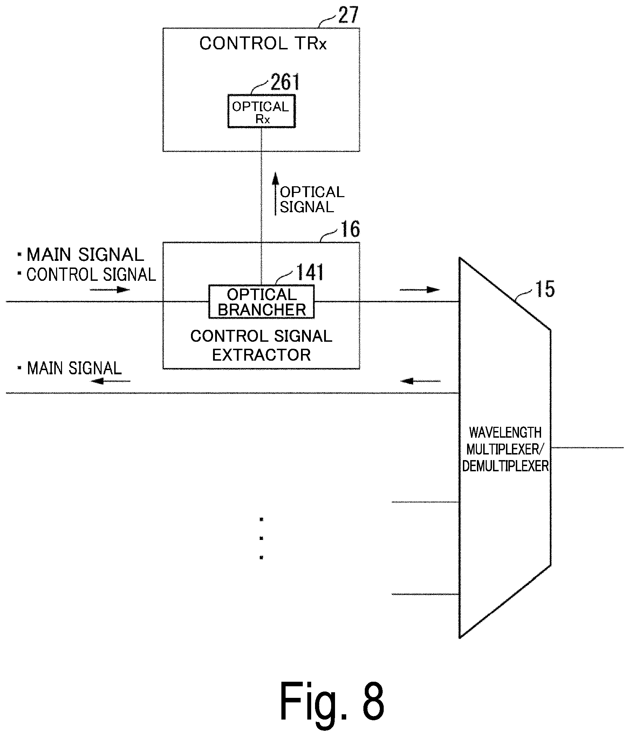

   Fig. 8 is a diagram showing a concrete example of a configuration of a control signal extractor 16 and a control TRx 27.
[Fig. 9]

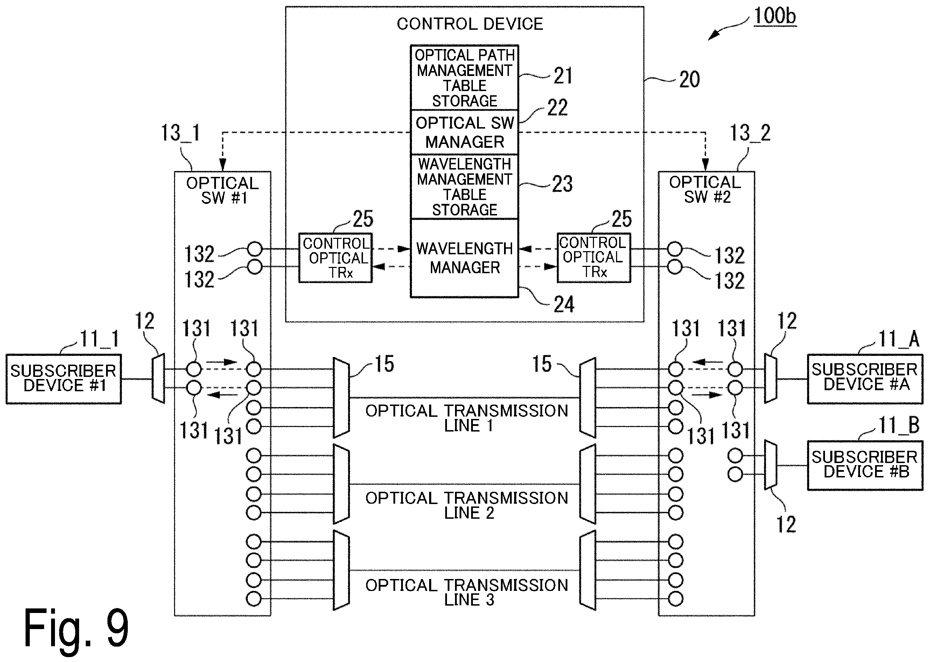

   Fig. 9 is a diagram showing a system configuration of a modification example (a communication system 100b) of a communication system according to the first embodiment.
[Fig. 10]

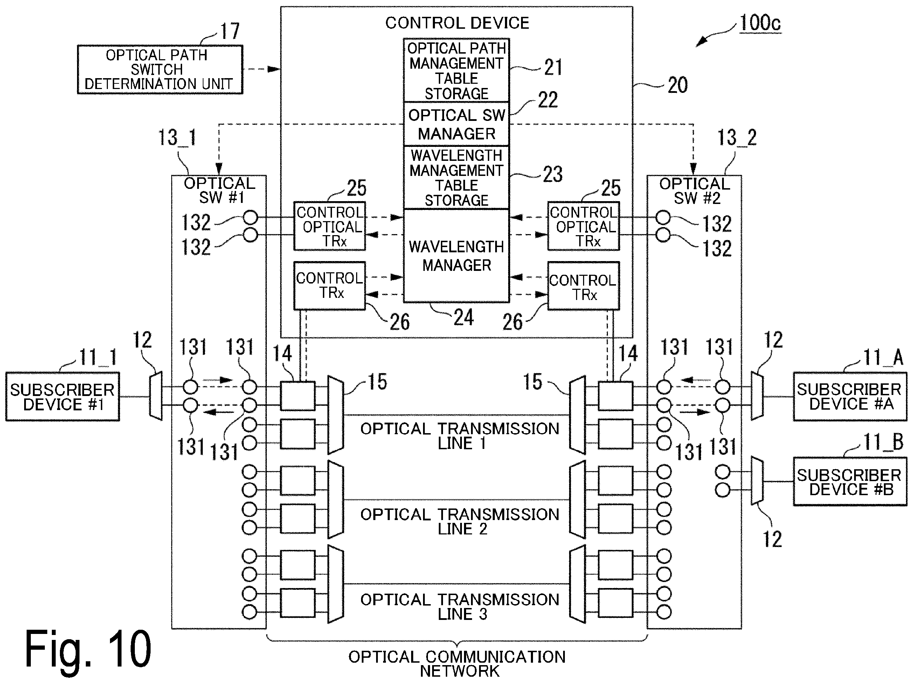

   Fig. 10 is a diagram showing a system configuration example of a second system configuration example (a communication system 100c) of the communication system 100 of the present invention.
[Fig. 11]

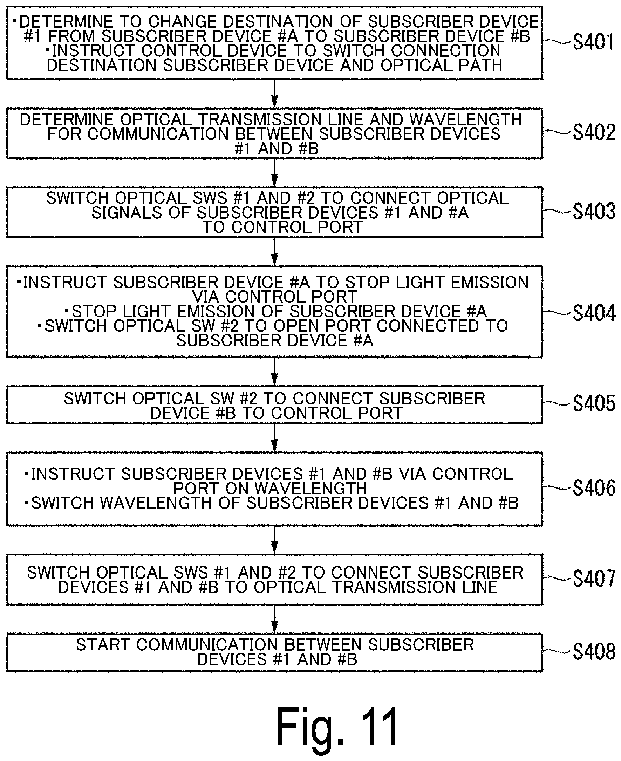

   Fig. 11 is a flowchart showing a concrete example (a fourth operation example) of an operation of a communication system 100c according to a second embodiment.
[Fig. 12]

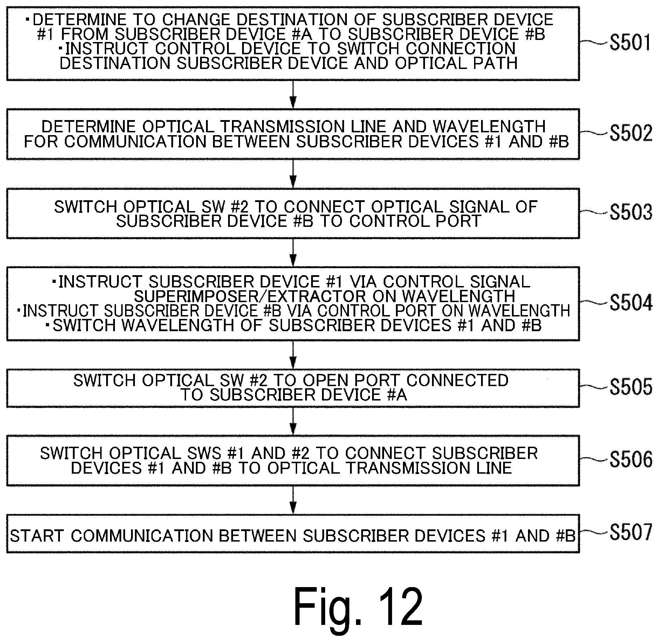

   Fig. 12 is a flowchart showing a concrete example (a fifth operation example) of an operation of the communication system 100c according to the second embodiment.
[Fig. 13]

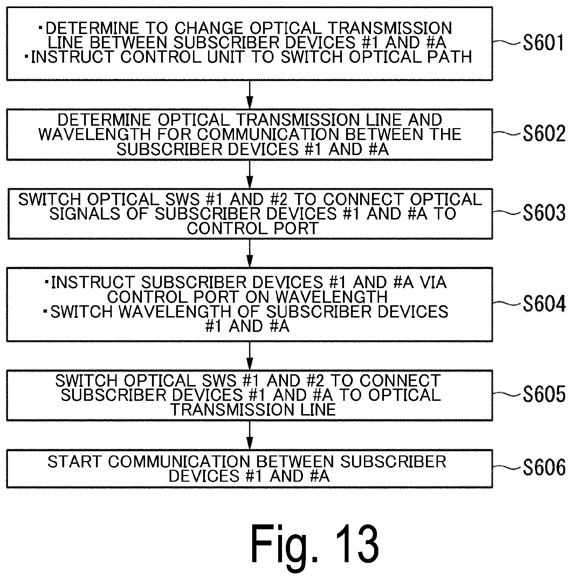

   Fig. 13 is a flowchart showing a concrete example (a sixth operation example) of an operation of the communication system 100c according to the second embodiment.
[Fig. 14]

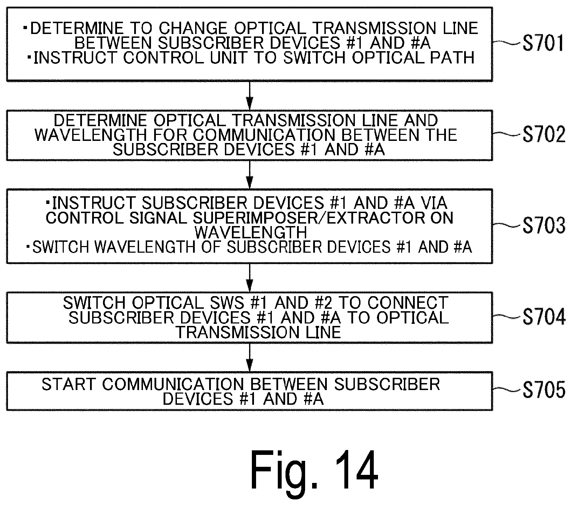

   Fig. 14 is a flowchart showing a concrete example (a seventh operation example) of an operation of the communication system 100c according to the second embodiment.
[Fig. 15]

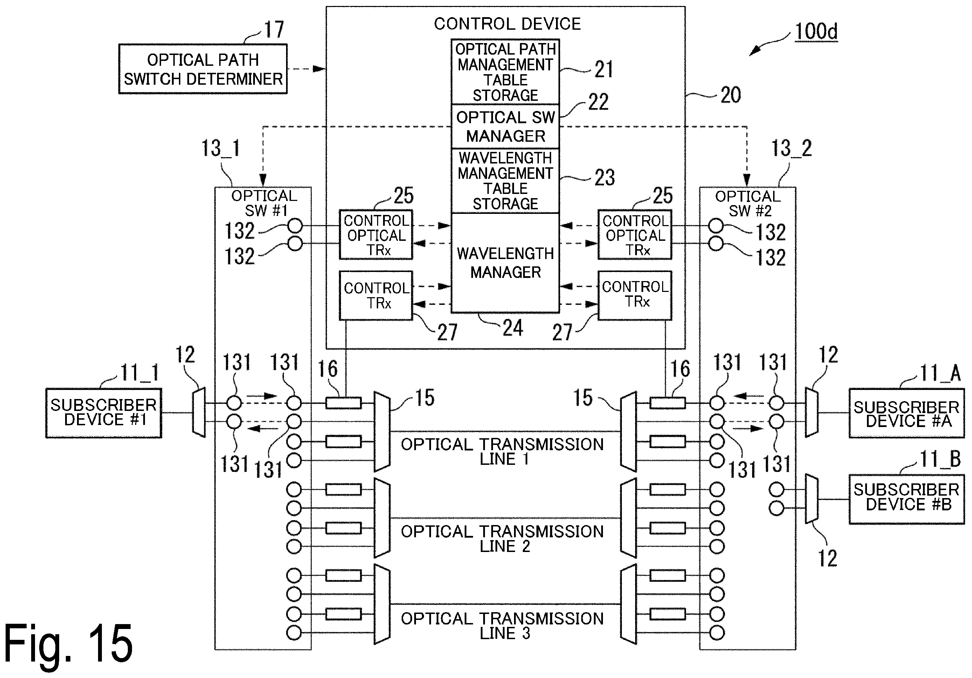

   Fig. 15 is a diagram showing a system configuration example of a modification example (a communication system 100d) of the communication system according to the second embodiment.
[Fig. 16]
   Fig. 15 is a diagram showing a system configuration example of a modification example (a communication system 100e) of the communication system according to the second embodiment.
[Fig. 17]

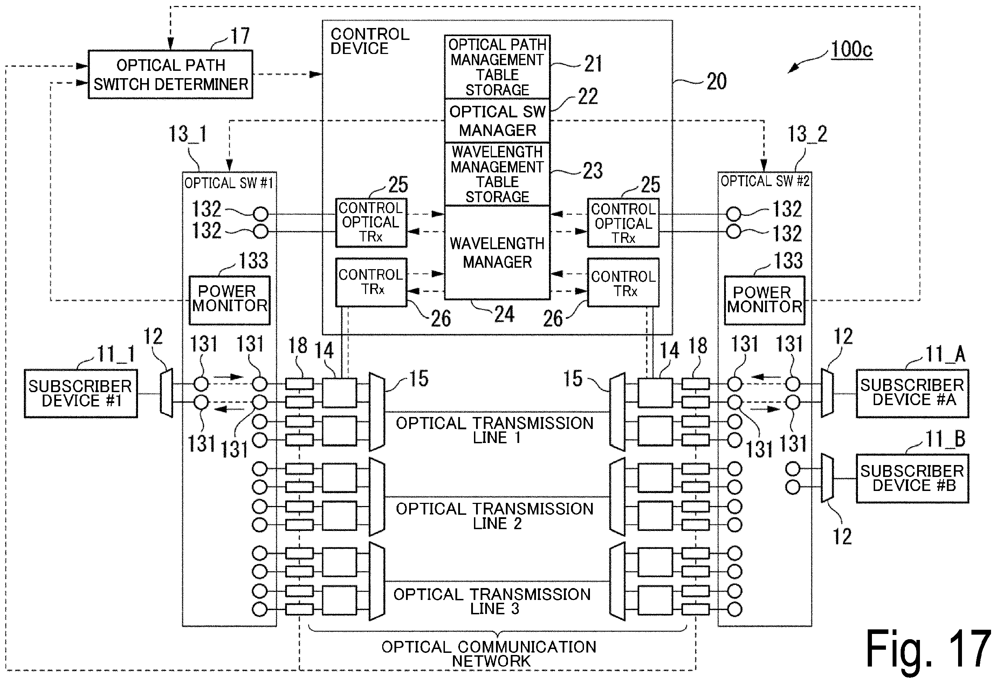

   Fig. 17 is a diagram showing a concrete configuration for judging a line failure in the second embodiment shown in Fig. 10.
[Fig. 18]
   Fig. 18 is a diagram showing a configuration example of a conventional optical communication system 900.

### [Description of Embodiments]

An embodiment of the present invention will be described in detail with reference to the diagrams.

### [First Embodiment]

Fig. 1 is a diagram showing a first system configuration example (a first embodiment) of a communication system 100 of the present invention. Hereinafter, a configuration example and an operation example of the communication system 100 according to the first embodiment will be described. The communication system 100 includes a plurality of optical SWs 13, a control signal superimposer/extractor 14, a wavelength multiplexer/demultiplexer 15, and a control device 20. One or more subscriber devices 11 can be connected to the optical SW 13. The subscriber device 11 is one of concrete examples of information equipment connected to the optical SW. The subscriber device 11 is connected to the optical SW 13 through a wavelength filter 12. The optical SW 13 and the other optical SW 13 are connected through the control signal superimposer/extractor 14, the wavelength multiplexer/demultiplexer 15, and an optical transmission line. The optical SW 13 has a plurality of input/output ports 131. The input/output port 131 on the subscriber device 11 side is connected to the wavelength filter 12. The input/output port 131 on the optical transmission line side is connected to the wavelength multiplexer/demultiplexer 15 and the control TRx 26. The optical SW 13 changes a connection between the input/output ports 131 in accordance with a control of the control device 20. In the example of Fig. 1, the input/output port 131 on the optical transmission line side is connected to the wavelength multiplexer/demultiplexer 15 and the control TRx 26 through the control signal superimposer/extractor 14. When an optical signal is outputted from the optical SW 13 to the optical transmission line, signals of a plurality of wavelengths are multiplexed by the wavelength multiplexer/demultiplexer 15. When the optical signal is inputted from the optical transmission line to the optical SW 13, signals of a plurality of wavelengths are demultiplexed by the wavelength multiplexer/demultiplexer 15.

The optical SW 13 is communicably connected to the control device 20. The optical SW 13 is communicably connected to the control device 20 via a control port 132, for example. The control port 132 is connected to a control optical TRx 25 of the control device 20 via a communication line. In addition, the optical SW 13 is communicably connected to the control device 20 via the control signal superimposer/extractor 14, for example. The control signal superimposer/extractor 14 is connected to the control TRx 26 of the control device 20 via the communication line. The same number of control TRx 26 of the control device 20 is provided as the number of control signal superimposer/extractors 14 connected to the optical SW 13 to which the control device 20 is connected.

The subscriber device 11 is connected to one of the optical SWs 13 and is communicably connected to the opposite subscriber device 11 via the optical SW13 and the optical transmission line. In the example shown in Fig. 1, a subscriber device 11_1 (hereinafter referred to as "subscriber device #1") is connected to an optical SW 13_1 (hereinafter referred to as "optical SW #1"), and a subscriber device 11_A (hereinafter referred to as "subscriber device #A") and a subscriber device 11_B (hereinafter referred to as "subscriber device #B") are connected to the optical SW 13_2 (hereinafter referred to as "optical SW #2"). Note that, in the example of Fig. 1, the subscriber device #A and the subscriber device #B are connected to the same optical SW 13 (optical SW #2), but they may be connected to different optical SW 13.

The signal outputted from the subscriber device #1 is inputted to the optical SW #1 via the wavelength filter 12 and the input/output port 131. The signal is inputted to the control signal superimposer/extractor 14 from the input/output port 131 which is a destination switched by the optical SW 13. The signal is outputted from the control signal superimposer/extractor 14 to the optical transmission line through the wavelength multiplexer/demultiplexer 15 and inputted to the opposite optical SW 13 through the optical transmission line, the wavelength multiplexer/demultiplexer 15, the control signal superimposer/extractor 14 and the input/output port 131. The signal is inputted to the subscriber device #A and the subscriber device #B from the input/output port 131 which is a destination switched by the optical SW 13 through the wavelength filter 12.

Note that, in Fig. 1, a configuration in which the optical SW 13 is directly connected to the opposite optical SW 13 through the optical transmission line is simply shown. However, as in the example shown in Fig. 18, a WDM network or the like including various topologies can be applied to the optical communication network between the optical SWs 13. The control device 20 is configured by using an information processing device. The control device 20 includes an optical path management table storage 21, an optical SW manager 22, a wavelength management table storage 23, a wavelength manager 24, a control optical TRx 25 and a control TRx 26. The optical path management table storage 21 is constituted by using a storage device such as a magnetic hard disk device or a semiconductor storage device. The optical path management table storage 21 stores an optical path management table. The optical path management table has data indicating a path (an optical path) in an optical communication network used for communication by each subscriber device 11 for each subscriber device 11.

The optical SW manager 22 determines an optical path between the subscriber device 11 and the opposite subscriber device 11, and records the determined optical path in the optical path management table. The optical SW manager 22 controls the optical SW 13 to which each subscriber device 11 is connected so that the determined optical path is formed.

The wavelength management table storage 23 is constituted by using the storage device such as the magnetic hard disk device or the semiconductor storage device. The wavelength management table storage 23 stores the wavelength management table. The wavelength management table has data indicating a wavelength allocated to the subscriber device 11 for each subscriber device 11. The subscriber device 11 performs communication by using the light of the wavelength allocated to the own device.

The wavelength manager 24 allocates a wavelength to the subscriber device 11. The wavelength manager 24 allocates a wavelength in response to, for example, a device (destination) of a communication destination of the subscriber device 11. The wavelength manager 24 records data indicating the wavelength allocated to each subscriber device 11 in the wavelength management table storage 23. The wavelength manager 24 notifies each subscriber device 11 of the allocated wavelength.

The control optical TRx 25 is an example of the configuration of an optical transmitter and an optical receiver in the control device 20. The control optical TRx 25 includes the optical transmitter and the optical receiver. The control optical TRx 25 may be constituted by using, for example, a variable wavelength optical transceiver.

The control TRx 26 includes an optical transmitter (optical Rx 261) and a receiver (Tx 262). The control TRx 26 transmits/receives a control signal to/from the optical SW 13 via the control signal superimposer/extractor 14.

Fig. 2 is a diagram showing a concrete example of a hardware configuration of the control device 20. As shown in Fig. 2, the control device 20 includes a communication interface 1, an auxiliary storage device 2, a memory 3, and a processor 4. The communication interface 1 performs input/output of data between outside device in the control device 20. The communication interface 1 functions as, for example, the control light TRx 25 and the control TRx 26. The auxiliary storage 2 is constituted by using the magnetic hard disk device and the semiconductor storage device. The auxiliary storage device 2 functions, for example, as the optical path management table storage 21 and the wavelength management table storage 23. The memory 3 and the processor 4 function as, for example, the optical SW manager 22 and the wavelength manager 24.

All or a pert of each function of the control device 20 may be implemented using hardware such as an ASIC (Application Specific Integrated Circuit), a PLD (Programmable Logic Device), or an FPGA (Field Programmable Gate Array). The above-described program may be recorded on a computer-readable recording medium. The computer-readable recording media including a portable media such as flexible disks, magnetooptical disks, ROMs, CD-ROMs, semiconductor storage devices (for example, SSD: Solid State Drive), a storage device such as hard disks built into computer system or semiconductor storage device, and the like. The above-described program may be transmitted via telecommunication lines.

Fig. 3 is a diagram showing a concrete example of a configuration of the control signal superimposer/extractor 14 and the control TRx 26. The control signal superimposer/extractor 14 includes an optical brancher 141 and an optical modulator 142. The optical brancher 141 is one aspect of a branch device. The optical brancher 141 may be constituted by using, for example, a power splitter. The optical brancher 141 branches an optical signal transmitted through the optical transmission line between the optical SW 13 and the wavelength multiplexer/demultiplexer 15 and outputs it to the optical Rx 261 in the control TRx 26. The optical Rx 261 demodulates a control signal (for example, an AMCC signal) superimposed on the main signal. The optical Rx 261 is demodulated by, for example, a low-pass filter or signal processing.

The optical modulator 142 may be constituted by using, for example, a variable optical attenuator (VOA) which can operate at a high speed. The optical modulator 142 superimposes an electric signal outputted by a Tx 262 in the control TRx 26 on a main signal in an optical stage as a control signal (for example, an AMCC signal). The subscriber device 11 establishes communication with the control TRx 26 via the control signal superimposer/extractor 14. Since the control signal superimposer/extractor 14 is provided between the optical SW 13 and the wavelength multiplexer/demultiplexer 15, the subscriber device 11 superimposes the control signal on the main signal and can communicate with the control device 20 through the control signal superimposer/extractor 14.

### (First Operation Example)

Fig. 4 is a flowchart showing a concrete example (first operation example) of the communication system 100 according to the first embodiment. More specifically, Fig. 4 shows an operation (optical path switch sequence) for changing the subscriber device 11 of the connection destination from the subscriber device #A to the subscriber device #B when the subscriber device #1 is communicating with the subscriber device #A. A concrete example of the optical path switch sequence will be described hereinafter.

First, in the subscriber device #1, an operation which triggers the change of the subscriber device 11 of the connection destination occurs. Such an operation may be any kind of operation. For example, information equipment (e.g., a personal computer) connected to the subscriber device #1 may input a switch request command to the subscriber device # 1 to indicate that the subscriber device 11 of the connection destination is changed from the subscriber device #A to the subscriber device #B. Alternatively, the subscriber device #1 may judge that the subscriber device 11 of the connection destination is spontaneously changed from the subscriber device #A to the subscriber device #B in response to the information received from the optical communication network, the fact that the condition set in the program or the like preset in the own device is satisfied, or the like.

In response to the above-described operation to be trigger, the subscriber device # 1 transmits a disconnection request to the subscriber device #A and the control device 20. The disconnection request is a signal indicating that the communication connection is disconnected thereafter. The disconnection request to the subscriber device #A may be included in the main signal and transmitted. In this case, the disconnection request is transmitted to the subscriber device #A via the optical communication network and the optical SW #2. The disconnection request to the subscriber device #A may be included in the control signal and transmitted. In this case, the disconnection request is transmitted to the subscriber device #A via the control signal superimposer/extractor 14 and the control device 20. The disconnection request to the control device 20 may be transmitted as the control signal while being superimposed on the optical signal. In this case, the optical signal on which the control disconnection request is superimposed is branched to the control TRx 26 in the optical brancher 141 of the control signal superimposer/extractor 14. The optical Rx 261 of the control TRx 26 demodulates the control signal (disconnection request) from the branched optical signal. The demodulated disconnection request is acquired, for example, by the optical SW manager 22. In response to the disconnection request, the subscriber device #A and the control device 20 transmit an ACK to the subscriber device #1. The subscriber device #1 receives the ACK (step S101).

The subscriber device #1 stops light emission to the communication line in response to transmission of the disconnection request. The subscriber device #A stops light emission to the communication line in response to reception of the disconnection request (step S102).

The control device 20 recognizes the stop of light emission of the subscriber device #1 and the subscriber device #A. The control device 20 may monitor the input light intensity at the input/output port 131 of the optical SW 13, for example, and recognize the stop of light emission in response to the input light intensity becoming lower than a threshold value. Then, the optical SW manager 22 of the control device 20 opens both an input/output port 131 connected to the subscriber device #1 of the optical SW #1 and an input/output port 131 connected to the subscriber device #A of the optical SW #2 (step S103).

Opening the input/output port 131 of the optical SW 13 indicates, for example, a state in which the input/output port 131 of the optical SW 13 is not connected to another input/output port 131. The opened input/output port 131 can be used by another subscriber device 11.

Then, the subscriber device #1 restarts the light emission to the communication line when a predetermined time elapses from the stop of the light emission. When the light is detected in the input/output port 131 to which the light has not been inputted for a predetermined time, the optical SW 13 connects the input/output port 131 to which the light has been detected to the control port 132. In this case, the optical SW 13 connects the input/output port 131 to which the subscriber device #1 is connected to the control port 132 in response to the start of light emission of the subscriber device #1. The subscriber device #1 transmits a connection switch request to the control device 20 via the control port 132.

The connection switch request includes information indicating the subscriber device 11 to be a new connection destination. For example, a connection switch request indicating "change the connection destination to the subscriber device #B" may be transmitted. When receiving the connection switch request, the optical SW manager 22 of the control device 20 transmits an ACK to the subscriber device #1 which is a transmission source. The subscriber device #1 receives the ACK from the control device 20 (step S104). By such an operation, the subscriber device 11 is connected to the control device 20 with the operation of the subscriber device 11 as a starting point, and a connection switch request can be transmitted.

Next, then optical SW manager 22 and the wavelength manager 24 of the control device 20 determine an optical path and a wavelength to be used for communication between the subscriber device #1 and the subscriber device #B, respectively (step S105). Note that when the subscriber device 11 can select and execute signal parameters such as a modulation system, a baud rate, and transmission light intensity from a plurality of candidates in the communication of the own device, the control device 20 may further determine such signal parameters in addition to the optical path and the wavelength.

Next, the control device 20 switches the optical SW #2 to connect the subscriber device #B to the control port 132 (step S106).

Next, the control device 20 notifies the subscriber device #1 of the determined wavelength through the control port 132. At this time, when the control device 20 determines the signal parameters, the control device 20 may also notify the subscriber device #1 of the determined signal parameters. When receiving the notification, the subscriber device #1 transmits an ACK to the control device 20 in response to the received notification. The control device 20 receives the ACK from the subscriber device #1.

The subscriber device #1 switches the wavelength used for communication in the own device to the notified wavelength in accordance with the notification received from the control device 20. The control device 20 notifies the subscriber device #B of the determined wavelength via the control port 132. At this time, when the control device 20 determines the signal parameters, the control device 20 may also notify the subscriber device #B of the determined signal parameters. Upon receiving the notification, the subscriber device #B transmits the ACK to the control device 20 in response to the received notification. The control device 20 receives the ACK from the subscriber device #B. The subscriber device #B switches the wavelength used for the communication in the own device to the notified wavelength in accordance with the notification received from the control device 20 (step S107).

The optical SW manager 22 of the control device 20 switches connection between the input/output ports 131 of the optical SW #1, and connects the subscriber device #1 from the control port 132 to the input/output port 131 on the full mesh side (the optical communication network side). In addition, the optical SW manager 22 of the control device 20 switches connection between the input/output ports 131 of the optical SW #2, and connects the subscriber device #B from the control port 132 to the input/output port 131 on the full mesh side (the optical network side) (step S108).

Thereafter, the subscriber device #1 and the subscriber device #B start communication via the inside of the optical SW 13 and the optical communication network (step S109).

In the first operation example of the communication system 100 thus constructed, the optical path between the subscriber devices 11 can be changed in response to the operation of the subscriber devices 11. Specifically, the following is performed. In the communication system 100, the subscriber device 11 temporarily stops light emission in the communication line. Thereafter, the subscriber device 11 emits light again, and the optical SW 13 connects the subscriber device 11 which starts emitting light again to the control port 132. Thereafter, the subscriber device 11 can transmit a connection switch request (information indicating the subscriber device 11 to be a new connection destination) to the control device 20 via the control port 132. Therefore, in the communication system 100, even after the optical path between the subscriber devices 11 is established, the communication can be changed (the optical path is changed) in response to the operation of the subscriber device 11.

### [Second Operation Example]

Fig. 5 is a flowchart showing a concrete example (second operation example) of the communication system 100 in the first embodiment. More specifically, Fig. 5 shows an operation (optical path switch sequence) for changing the subscriber device 11 of the connection destination from the subscriber device #A to the subscriber device #B when the subscriber device #1 is communicating with the subscriber device #A. In this point, Fig. 5 corresponds to Fig. 4. However, there is a difference in concrete processing between Fig. 4 and Fig. 5. Hereinbelow, a second operation example shown in Fig. 5 will be described. Note that the operation which triggers the change of the subscriber device 11 of the connection destination is the same as that of the first operation example.

First, the subscriber device #1 transmits a disconnection request to the subscriber device #A and the control device 20 (step S201). Processing is similar to that of the step S101 shown in Fig. 4.

Then, the control device 20 controls the optical SW #1 and the optical SW #2 in response to the disconnection request, and connects both the input/output ports 131 of the subscriber device #1 and the subscriber device #A to the control port 132. The subscriber device #1 transmits a connection switch request to the control device 20 via the control port 132. The connection switch request includes information indicating the subscriber device 11 to be a new connection destination. For example, a connection switch request indicating "change the connection destination to the subscriber device #B" may be transmitted. When receiving the connection switch request, the optical SW manager 22 of the control device 20 transmits an ACK to the subscriber device #1 which is a transmission source. The subscriber device #1 receives the ACK from the control device 20 (step S202). By such an operation, the subscriber device 11 is connected to the control device 20 with the operation of the subscriber device 11 as a starting point, and a connection switch request can be transmitted.

The optical SW manager 22 of the control device 20 instructs the subscriber device #A to stop light emission through the control port 132. The subscriber device #A, which has received the instruction to stop light emission, transmits the ACK to the control device 20. The subscriber device #A stops the light emission to the transmission line in response to the instruction of the light emission stop. The optical SW manager 22 of the control device 20 switches connection between the input/output ports 131 of the optical SW #2 to open the input/output port 131 connected to the subscriber device #A of the optical SW #2 (step S203).

Next, the control device 20 switches the optical SW #2 to connect the subscriber device #B to the control port 132 (step S204).

Next, then optical SW manager 22 and the wavelength manager 24 of the control device 20 determine an optical path and a wavelength to be used for communication between the subscriber device #1 and the subscriber device #B, respectively (step S205). Note that when the subscriber device 11 can select and execute signal parameters such as a modulation system, a baud rate, and transmission light intensity from a plurality of candidates in the communication of the own device, the control device 20 may further determine such signal parameters in addition to the optical path and the wavelength.

Next, the processing of steps S206 to S208 is executed. The processing of steps S206 to S208 is similar to that of the steps S107 to S109 in Fig. 4 and therefore the description will be omitted.

In the second operation example of the communication system 100 thus constructed, the optical path between the subscriber devices 11 can be changed in response to the operation of the subscriber devices 11. Specifically, the following is performed. In the communication system 100, the subscriber device 11 can transmit information (disconnection request) related to disconnection of communication to the control device 20 via the control signal superimposer/extractor 14. In response to the disconnection request, the control device 20 controls the optical SW 13 to connect the subscriber device 11 of the request source to the control port 132. Thereafter, the subscriber device 11 can transmit a connection switch request (information indicating the subscriber device 11 to be a new connection destination) to the control device 20 via the control port 132. Therefore, in the communication system 100, even after the optical path between the subscriber devices 11 is established, the communication can be changed (the optical path is changed) in response to the operation of the subscriber device 11.

### [Third Operation Example]

Fig. 6 is a flowchart showing a concrete example (third operation example) of the communication system 100 in the first embodiment. More specifically, Fig. 6 shows an operation (optical path switch sequence) for changing the subscriber device 11 of the connection destination from the subscriber device #A to the subscriber device #B when the subscriber device #1 is communicating with the subscriber device #A. In this point, Fig. 6 is coincident with Fig. 4. However, there is a difference in concrete processing between Fig. 4 and Fig. 6. Hereinbelow, the third operation example shown in Fig. 6 will be described. Note that the operation which triggers the change of the subscriber device 11 of the connection destination is the same as that of the first operation example.

First, the subscriber device #1 transmits a connection switch request to the control device 20. The connection switch request includes information indicating the subscriber device 11 to be a new connection destination. For example, a connection switch request indicating "change the connection destination to the subscriber device #B" may be transmitted. The connection switch request to the control device 20 may be transmitted as a control signal while being superimposed on the optical signal. In this case, the optical signal on which the control switch request is superimposed is branched to the control TRx 26 in the optical brancher 141 of the control signal superimposer/extractor 14. The optical Rx 261 of the control TRx 26 demodulates the control signal (connection switch request) from the branched optical signal. The demodulated connection switch request is acquired, for example, by the optical SW manager 22. In response to the connection switch request, the control device 20 transmits an ACK to the subscriber device #1. The subscriber device #1 receives the ACK (step S301). Further, the subscriber device #1 transmits a disconnection request to the subscriber device #A. Since the transmission of the disconnection request to the subscriber device #A is the same processing as that in the step 101 in Fig. 4, the description thereof will be omitted. By such an operation, the connection switch request can be transmitted from the subscriber device 11 to the control device 20 with the operation of the subscriber device 11 as a starting point.

Next, then optical SW manager 22 and the wavelength manager 24 of the control device 20 determine an optical path and a wavelength to be used for communication between the subscriber device #1 and the subscriber device #B, respectively (step S302). Note that when the subscriber device 11 can select and execute signal parameters such as a modulation system, a baud rate, and transmission light intensity from a plurality of candidates in the communication of the own device, the control device 20 may further determine such signal parameters in addition to the optical path and the wavelength.

Next, the control device 20 switches the optical SW #2 to connect the subscriber device #B to the control port 132 (step S303).

Then, the control device 20 notifies the subscriber device #1 of the determined wavelength through the control signal superimposer/extractor 14. At this time, when the control device 20 determines the signal parameters, the control device 20 may also notify the subscriber device #1 of the determined signal parameters. When receiving the notification, the subscriber device #1 transmits an ACK to the control device 20 via the control signal superimposer/extractor 14 in response to the received notification. The control device 20 receives the ACK from the subscriber device #1. The subscriber device #1 switches the wavelength used for communication in the own device to the notified wavelength in accordance with the notification received from the control device 20. Note that in order to transmit the notification of the wavelength from the control device 20 to the subscriber device #1 as the AMCC, it is necessary to superimpose the AMCC signal on the optical signal transmitted from the subscriber device #A to the subscriber device #1. Therefore, it is preferable to avoid opening a port connected to the subscriber device #A and extinction of the subscriber device #A, as in a step S305 described later, before this processing.

The control device 20 notifies the subscriber device #B of the determined wavelength via the control port 132. At this time, when the control device 20 determines the signal parameters, the control device 20 may also notify the subscriber device #B of the determined signal parameters. Upon receiving the notification, the subscriber device #B transmits an ACK to the control device 20 in response to the received notification. The control device 20 receives the ACK from the subscriber device #B. The subscriber device #B switches the wavelength used for communication in the own device to the notified wavelength in accordance with the notification received from the control device 20 (step S304).

The optical SW manager 22 of the control device 20 switches connection between the input/output ports 131 of the optical SW #2 to open the input/output port 131 connected to the subscriber device #A of the optical SW #2 (step S305). By this operation, it is possible to prevent the light of the subscriber device #A not connected to any subscriber device 11 from being input to the optical transmission line (the optical communication network) and becoming noise to other optical signals.

The optical SW manager 22 of the control device 20 switches connection between the input/output ports 131 of the optical SW #1 and connects the subscriber device #1 to the input/output port 131 of a path directed to the subscriber device #B. In addition, the optical SW manager 22 of the control device 20 switches connection between input/output ports 131 of the optical SW #2 and connects the subscriber device #B from the control port 132 to the input/output port 131 on the full mesh side (the optical network side) (step S306).

Thereafter, the subscriber device #1 and the subscriber device #B start communication via the inside of the optical SW 13 and the optical communication network (step S307).

In the third operation example of the communication system 100 constructed as described above, the optical path between the subscriber devices 11 can be changed in response to the operation of the subscriber devices 11. Specifically, the following is performed. In the communication system 100, the subscriber device 11 can transmit information (connection switch request) related to a new connection destination of communication to the control device 20 via the control signal superimposer/extractor 14. In response to the connection switch request, the control device 20 controls the optical SW 13 to connect the subscriber device 11 of the request source to the subscriber device 11 of a new connection destination in accordance with the request. Therefore, in the communication system 100, even after the optical path between the subscriber devices 11 is established, the communication can be changed (the optical path is changed) in response to the operation of the subscriber device 11.

In addition, in the process of changing the optical path, it is not necessary to intentionally connect the subscriber device 11 (the subscriber device #1) which is a request source of the change to the control port 132. Therefore, the optical path can be changed with a smaller amount of processing. As a result, the optical path can be changed in a shorter time, for example.

### (Modification Example of Operation)

Next, a modification example of each operation shown in Figs. 4 to 6 will be described. First, a modification example of the first operation example shown in Fig. 4 will be described. In the step S102, the subscriber device #1 (transmission source of the communication disconnection request) stops light emission, but the subscriber device #A (transmission destination of the communication disconnection request) may be configured not to stop light emission.

In the step S101, the communication disconnection request from the subscriber device #1 to the subscriber device #A may not necessarily be transmitted. In this case, the subscriber device #1 may stop the light emission in the step S102 without transmitting the communication disconnection request.

In addition, in the first operation example and each modification example described above, the subscriber device #1 may be configured not to send a disconnection request to the control device 20. Even in such a configuration, the subscriber device #1 stops the light emission in the step S103, and the subscriber device #1 is connected to the control port 132 in response to the fact that the subscriber device #1 restarts the light emission in the step S104. Thus, the subscriber device 11 is connected to the control device 20 with the operation of the subscriber device 11 as a starting point, and a connection switch request can be transmitted.

Further, the subscriber device #1 may be configured so as not to send a disconnection request to the control device 20 and the subscriber device #A. In this case, the processing of S101 may be omitted in the first place.

The order of processing in the step S105 and the step S106 may be reverse. In addition, in the processing of each step, the ACK transmission and reception operations may be omitted. Further, in the transmission and reception of the control signal between the subscriber device #1 and the subscriber device #A, an in-band system performed within the overhead of the protocol may be used. Similarly, in the transmission and reception of the control signal between the subscriber device 11 and the control TRx 26, the in-band system performed within the overhead of the protocol may be used. Also, the above-mentioned in-band system may be adopted in a configuration in which the control signal is transmitted from the subscriber device 11 and received by the control TRx 26. As the in-band system, an area called a GCC (Generic Communications Channel) in an overhead for network monitoring in an OTN (Optical Transport Network) widely employed in a large capacity long-distance optical transmission network, for example, can be used. In such a configuration, those disclosed in the following literature may be applied to, for example. (Reference Literature) ITU-T G. 709 available at https:// www.itu.int/rec/T-REC-G.709/

The stop and the restart of the light emission in the subscriber device 11 may be realized, for example, by turning off or turning on the power source of the subscriber device 11.

Next, a modification example of the second operation example shown in Fig. 5 will be described. The communication disconnection request from the subscriber device #1 to the subscriber device #A may not necessarily be transmitted. The processing order of steps S203, S204, and S205 may be changed. Also, the operation of transmitting and receiving the ACK in the processing of each step may be omitted.

Next, a modification example of the third operation example shown in Fig. 6 will be described. In the step S301, it is not necessary to transmit a communication disconnection request from the subscriber device #1 to the subscriber device #A. The subscriber device #A may be configured to autonomously stop (extinguish) the light emission in response to absence of a reception signal for a predetermined time or longer after the input/output port 131 is opened in the optical SW #2. The order of steps S302 and S303 may be reversed.

Until the processing of the step S304, the subscriber device #A emits the light and is connected to the optical transmission line. Therefore, it is desirable that the order of processing in the step S305 and the step S306 is not reversed. For example, it is assumed that the subscriber device #B, which is a new connection partner, is instructed to set the same optical transmission path and wavelength as those of the subscriber device #A. In this case, the setting of the input/output port 131 of the optical SW 13 becomes the same in the subscriber device #A and the subscriber device #B. Therefore, it is not possible to complete the setting of the optical SW 13. Therefore, in order to correctly complete the setting of the optical SW 13, the order of the step S305 and the step S306 must be as described. Also, the operation of transmitting and receiving the ACK in the processing of each step may be omitted.

### (Modification Example of Configuration)

Fig. 7 is a diagram showing a system configuration example of the modification example (a communication system 100a) of the communication system. The communication system 100a shown in Fig. 7 is provided with a control signal extractor 16 in place of the control signal superimposer/extractor 14. Further, the communication system 100a shown in Fig. 7 is provided with a control Rx 27 in place of the control TRx 26.

Fig. 8 is a diagram showing a concrete example of a configuration of the control signal extractor 16 and the control TRx 27. The control signal extractor 16 includes an optical brancher 141. The control signal extractor 16 is different from the control signal superimposer/extractor 14 in that it does not include the optical modulator 142. The optical brancher 141 can use a power splitter, for example. The power splitter branches the optical signal transmitting through the optical transmission line and outputs it to the optical Rx 261 in the control Rx 27.

The control TRx 27 includes an optical Rx 261. The control TRx 27 differs from the control TRx 26 in that it does not include Tx 262. The optical Rx 261 demodulates the control signal (for example, the AMCC signal) superimposed on the main signal. The optical Rx 261 is demodulated by, for example, a low-pass filter or signal processing.

Fig. 9 is a diagram showing a system configuration example of the modification example (a communication system 100b) of the communication system. The communication system 100b shown in Fig. 9 does not include the control signal superimposer/extractor 14, a control signal extractor 16, the control TRx 26, and the control TRx 27.

The first operation example shown in Fig. 4 may be performed in the communication system 100a shown in Fig. 7. The second operation example shown in Fig. 6 may be performed in the communication system 100a shown in Fig. 7. In the first operation example shown in Fig. 4, when the configuration in which the disconnection request is not transmitted to the control device 20 is adopted as described above, and the configuration in which the processing of the step S101 is not executed is adopted, it may be executed in the communication system 100b shown in Fig. 9.

Even in each communication system (the communication system 100a and the communication system 100b) of the modification example related to these configurations, the same technical effect as the communication system 100 can be obtained when applied in the above-mentioned operation example.

### [Second Embodiment]

Fig.10 is a diagram showing a system configuration example of a second system configuration example (a second embodiment: a communication system 100c) of the communication system 100 of the present invention. The communication system 100c shown in Fig. 10 is different from the first embodiment in that it further includes an optical path switch determiner 17. Hereinafter, different points from the first embodiment among a configuration example and an operation example of the communication system 100c according to the second embodiment will be described.

The optical path switch determiner 17 is information equipment capable of communicating with the control device 20. When a predetermined connection destination switch condition is satisfied, the optical path switch determiner 17 determines that a subscriber device 11 as a connection destination is changed to another subscriber device 11 with respect to a certain subscriber device 11. As a concrete example of the connection destination switch condition, for example, it is given to switch the connection destination from the active system to the redundant system. When it is determined that the connection destination is to be changed, the optical path switch determiner 17 instructs the control device 20 to change the connection destination.

When a predetermined optical path switch condition is satisfied, the optical path switch determiner 17 determines to change an optical path from its own device to a device of a connection destination without changing the subscriber device 11 of the connection destination with respect to a certain subscriber device 11. As a concrete example of the optical path switch condition, it is given to determine the switch from the active path to the redundant path for the reason of line failure, facility change, and the like. When it is determined to change the optical path, the optical path switch determiner 17 instructs the control device 20 to change the optical path.

When the change of the connection destination is instructed from the optical path switch determiner 17, the control device 20 changes the connection destination of the subscriber device 11 to be processed by controlling the optical SW 13 in accordance with the instruction. When the change of the optical path is instructed from the optical path switch determiner 17, the control device 20 changes the optical path of the subscriber device 11 to be processed by controlling the optical SW 13 in accordance with the instruction.

### (Fourth Operation Example)

Fig. 11 is a flowchart showing a concrete example (a fourth operation example) of the communication system 100c in the second embodiment. More specifically, Fig. 11 shows an operation (optical path switch sequence) for changing the subscriber device 11 of the connection destination from the subscriber device #A to the subscriber device #B when the subscriber device #1 is communicating with the subscriber device #A. A concrete example of the optical path switch sequence will be described hereinafter.

First, a connection destination switch condition is satisfied with respect to the subscriber device #1. Thus, the optical path switch determiner 17 determines to change the subscriber device 11 to which the subscriber device #1 is connected from the subscriber device #A to the subscriber device #B. Then, the optical path switch determiner 17 instructs the control device 20 to change the subscriber device 11 of the connection destination of the subscriber device #1 from the subscriber device #A to the subscriber device #B and to switch the optical path (step S401).

Next, then optical SW manager 22 and the wavelength manager 24 of the control device 20 determine an optical path and a wavelength to be used for communication between the subscriber device #1 and the subscriber device #B, respectively (step S402). Note that when the subscriber device 11 can select and execute signal parameters such as a modulation system, a baud rate, and transmission light intensity from a plurality of candidates in the communication of the own device, the control device 20 may further determine such signal parameters in addition to the optical path and the wavelength.

Next, the control device 20 controls the optical SW #1 to connect the input/output port 131 to which the subscriber device #1 is connected to the control port 132. The control device 20 controls the optical SW #2 to connect the input/output port 131 to which the subscriber device #A is connected to the control port 132 (step S403).

The control device 20 instructs the subscriber device #A to stop the light emission through the control port 132. In response to the instruction of the light emission stop, the subscriber device #A transmits an ACK to the control device 20. The control device 20 receives the ACK. The subscriber device #A stops the light emission to the communication line in response to the instruction of the light emission stop. The control device 20 recognizes the light emission stop of the subscriber device #A. The control device 20 may monitor the input light intensity at the input/output port 131 of the optical SW 13, for example, and recognize the light emission stop in response to the input light intensity becoming lower than a threshold. Then, the optical SW manager 22 of the control device 20 opens the input/output port 131 connected to the subscriber device #A of the optical SW #2 (step S404).

Next, the control device 20 switches the optical SW #2 to connect the subscriber device #B to the control port 132 (step S405).

Next, the control device 20 notifies the subscriber device #1 of the determined wavelength through the control port 132. At this time, when the control device 20 determines the signal parameters, the control device 20 may also notify the subscriber device #1 of the determined signal parameters. When receiving the notification, the subscriber device #1 transmits an ACK to the control device 20 in response to the received notification. The control device 20 receives the ACK from the subscriber device #1. The subscriber device #1 switches the wavelength used for communication in the own device to the notified wavelength in accordance with the notification received from the control device 20.

The control device 20 notifies the subscriber device #B of the determined wavelength via the control port 132. At this time, when the control device 20 determines the signal parameters, the control device 20 may also notify the subscriber device #B of the determined signal parameters. Upon receiving the notification, the subscriber device #B transmits an ACK to the control device 20 in response to the received notification. The control device 20 receives the ACK from the subscriber device #B. The subscriber device #B switches the wavelength used for communication in the own device to the notified wavelength in accordance with the notification received from the control device 20 (step S406).

The optical SW manager 22 of the control device 20 switches connection between the input/output ports 131 of the optical SW #1, and connects the subscriber device #1 from the control port 132 to the input/output port 131 on the full mesh side (the optical communication network side). In addition, the optical SW manager 22 of the control device 20 switches connection between the input/output ports 131 of the optical SW #2, and connects the subscriber device #B from the control port 132 to the input/output port 131 on the full mesh side (the optical network side) (step S407).

Thereafter, the subscriber device #1 and the subscriber device #B start communication via the inside of the optical SW 13 and the optical communication network (step S408).

In the fourth operation example of the communication system constructed as described above, the optical path between the subscriber devices 11 can be changed in response to the operation of the optical path switch determiner 17. Specifically, the following is performed. In the communication system 100c, the optical path switch determiner 17 connects each subscriber device 11 to the control port 132 in response to the fact that the connection destination switch condition is satisfied. The control device 20 can instruct each subscriber device 11 to switch connection via the control port 132. Therefore, in the communication system 100, even after the optical path between the subscriber devices 11 is established, the communication can be changed (the optical path is changed) in response to the operation of the optical path switch determiner 17.

### [Fifth Operation Example]

Fig. 12 is a flowchart showing a concrete example (a fifth operation example) of the operation of the communication system 100c in the second embodiment. More specifically, Fig. 12 shows an operation (an optical path switch sequence) for changing the subscriber device 11 of the connection destination from the subscriber device #A to the subscriber device #B when the subscriber device #1 is communicating with the subscriber device #A. A concrete example of the optical path switch sequence will be described hereinafter.

First, a connection destination switch condition is satisfied with respect to the subscriber device #1. Thus, the optical path switch determiner 17 determines to change the subscriber device 11 to which the subscriber device #1 is connected from the subscriber device #A to the subscriber device #B. Then, the optical path switch determiner 17 instructs the control device 20 to change the subscriber device 11 of the connection destination of the subscriber device #1 from the subscriber device #A to the subscriber device #B and to switch the optical path (step S501).

Next, then optical SW manager 22 and the wavelength manager 24 of the control device 20 determine an optical path and a wavelength to be used for communication between the subscriber device #1 and the subscriber device #B, respectively (step S502). Note that when the subscriber device 11 can select and execute signal parameters such as a modulation system, a baud rate, and transmission light intensity from a plurality of candidates in the communication of the own device, the control device 20 may further determine such signal parameters in addition to the optical path and the wavelength.

Next, the control device 20 controls the optical SW #2 to connect the input/output port 131 to which the subscriber device #B is connected to the control port 132 (Step S503).

The control device 20 instructs the subscriber device #1 on the wavelength determined in the step S502 through the control signal superimposer/extractor 14. At this time, when the control device 20 determines the signal parameters, the control device 20 may also notify the subscriber device #1 of the determined signal parameters. When receiving the notification, the subscriber device #1 transmits an ACK to the control device 20 in response to the received notification. The control device 20 receives the ACK from the subscriber device #1. The subscriber device #1 switches the wavelength used for communication in the own device to the notified wavelength in accordance with the notification received from the control device 20.

In this instruction, for example, the light emitted by the subscriber device #A may be used. More specifically, the AMCC signal indicating, for example, a wavelength instruction may be superimposed on the optical signal transmitted from the subscriber device #A. In this case, before this processing, it is inhibited to open the port connected to the subscriber device #A or to extinguish the light of the subscriber device #A.

The control device 20 instructs the subscriber device #B on the wavelength determined in the step S502 through the control port 132. At this time, when the control device 20 determines the signal parameters, the control device 20 may also notify the subscriber device #B of the determined signal parameters. Upon receiving the notification, the subscriber device #B transmits an ACK to the control device 20 in response to the received notification. The control device 20 receives the ACK from the subscriber device #B. The subscriber device #B switches the wavelength used for communication in the own device to the notified wavelength in accordance with the notification received from the control device 20 (step S504).

The optical SW manager 22 of the control device 20 opens the input/output port 131 connected to the subscriber device #A of the optical SW #2 (step S505). Thereafter, the subscriber device #A may stop the light emission in response to the fact that a predetermined condition indicating that no communication partner is present is satisfied (for example, the optical signal is not received for a predetermined time).

The optical SW manager 22 of the control device 20 switches connection between the input/output ports 131 of the optical SW #1, and connects the subscriber device #1 from the control port 132 to the input/output port 131 on the full mesh side (the optical communication network side). In addition, the optical SW manager 22 of the control device 20 switches connection between the input/output ports 131 of the optical SW #2, and connects the subscriber device #B from the control port 132 to the input/output port 131 on the full mesh side (the optical network side) (step S506).

Thereafter, the subscriber device #1 and the subscriber device #B start communication via the inside of the optical SW 13 and the optical communication network (step S507).

In the fifth operation example of the communication system constructed as described above, the optical path between the subscriber devices 11 can be changed in response to the operation of the optical path switch determiner 17. Specifically, the following is performed. In the communication system 100c, the optical path switch determiner 17 connects a new subscriber device 11 to the control port 132 in response to the fact that the connection destination switch condition is satisfied. The new subscriber device 11 is instructed on the wavelength or the like through the control port 132. The subscriber device 11 (the subscriber device #1) which maintains the optical communication even after the switch is instructed on the wavelength or the like through the control signal superimposer/extractor 14. Therefore, in the communication system 100, even after the optical path between the subscriber devices 11 is established, the communication can be changed (the optical path is changed) in response to the operation of the optical path switch determiner 17.

In addition, in the process of changing the optical path, it is not necessary to intentionally connect the subscriber device 11 (for example, subscriber device #1) to the control port 132. Therefore, the optical path can be changed with a smaller amount of processing. As a result, the optical path can be changed in a shorter time, for example.

### (Sixth Operation Example)

Fig. 13 is a flowchart showing a concrete example (a sixth operation example) of the communication system 100c in the second embodiment. More specifically, Fig. 13 shows an operation (an optical path switch sequence) for changing the optical path between the subscriber device #1 and the subscriber device #A without changing the subscriber device 11 of the connection destination from the subscriber device #A when the subscriber device #1 are communicating with the subscriber device #A. A concrete example of the optical path switch sequence will be described hereinafter.

First, the optical path switch condition is satisfied for the subscriber device #1. Thus, the optical path switch determiner 17 determines to change the optical path between the subscriber device #1 and the subscriber device #A. Then, the optical path switch determiner 17 instructs the control device 20 to change the optical path between the subscriber device #1 and the subscriber device #A (step S601).

Next, the optical SW manager 22 and the wavelength manager 24 of the control device 20 determine an optical path and a wavelength used for communication between the subscriber device #1 and the subscriber device #A, respectively (step S602). Note that when the subscriber device 11 can select and execute signal parameters such as a modulation system, a baud rate, and transmission light intensity from a plurality of candidates in the communication of the own device, the control device 20 may further determine such signal parameters in addition to the optical path and the wavelength.

Next, the control device 20 controls the optical SW #1 to connect the input/output port 131 to which the subscriber device #1 is connected to the control port 132. The control device 20 controls the optical SW #2 to connect the input/output port 131 to which the subscriber device #A is connected to the control port 132 (step S603).

Next, the control device 20 notifies the subscriber device #1 of the determined wavelength through the control port 132. At this time, when the control device 20 determines the signal parameters, the control device 20 may also notify the subscriber device #1 of the determined signal parameters. When receiving the notification, the subscriber device #1 transmits an ACK to the control device 20 in response to the received notification. The control device 20 receives the ACK from the subscriber device #1. The subscriber device #1 switches the wavelength used for communication in the own device to the notified wavelength in accordance with the notification received from the control device 20.

The control device 20 notifies the subscriber device #A of the determined wavelength via the control port 132. At this time, when the control device 20 determines the signal parameters, the control device 20 may also notify the subscriber device #A of the determined signal parameters. Upon receiving the notification, the subscriber device #A transmits an ACK to the control device 20 in response to the received notification. The control device 20 receives the ACK from the subscriber device #A. The subscriber device #A switches the wavelength used for communication in its own device to the notified wavelength in accordance with the notification received from the control device 20 (step S604).

The optical SW manager 22 of the control device 20 switches connection between the input/output ports 131 of the optical SW #1, and connects the subscriber device #1 from the control port 132 to the input/output port 131 on the full mesh side (the optical communication network side). The optical SW manager 22 of the control device 20 switches connection between the input/output ports 131 of the optical SW #2, and connects the subscriber device #A from the control port 132 to the input/output port 131 on the full mesh side (the optical network side) (step S605).

Thereafter, the subscriber device #1 and the subscriber device #A start communication by a new optical path via the inside of the optical SW 13 and the optical communication network (step S606).

In the sixth operation example of the communication system constructed as described above, the optical path between the subscriber devices 11 can be changed in response to the operation of the optical path switch determiner 17. Specifically, the following is performed. In the communication system 100c, the optical path switch determiner 17 connects each subscriber device 11 to the control port 132 in response to the fact that the optical path switch condition is satisfied. The control device 20 can instruct each subscriber device 11 to switch the wavelength through the control port 132. Therefore, in the communication system 100, even after the optical path between the subscriber devices 11 is established, the communication can be changed (the optical path is changed) in response to the operation of the optical path switch determiner 17.

### (Seventh Operation Example)

Fig. 14 is a flowchart showing a concrete example (a seventh operation example) of the communication system 100c in the second embodiment. More specifically, Fig. 14 shows an operation (an optical path switch sequence) for changing the optical path between the subscriber device #1 and the subscriber device #A without changing the subscriber device 11 of the connection destination from the subscriber device #A when the subscriber device #1 are communicating with the subscriber device #A. A concrete example of the optical path switch sequence will be described hereinafter.

First, the optical path switch condition is satisfied for the subscriber device #1. Thus, the optical path switch determiner 17 determines to change the optical path between the subscriber device #1 and the subscriber device #A. Then, the optical path switch determiner 17 instructs the control device 20 to change the optical path between the subscriber device #1 and the subscriber device #A (step S701).

Next, the optical SW manager 22 and the wavelength manager 24 of the control device 20 determine an optical path and a wavelength used for communication between the subscriber device #1 and the subscriber device #A, respectively (step S702). Note that when the subscriber device 11 can select and execute signal parameters such as a modulation system, a baud rate, and transmission light intensity from a plurality of candidates in the communication of the own device, the control device 20 may further determine such signal parameters in addition to the optical path and the wavelength.

Then, the control device 20 instructs the subscriber device #1 on the wavelength determined in the step S702 through the control signal superimposer/extractor 14. At this time, when the control device 20 determines the signal parameters, the control device 20 may also notify the subscriber device #1 of the determined signal parameters. When receiving the notification, the subscriber device #1 transmits an ACK to the control device 20 in response to the received notification. The control device 20 receives the ACK from the subscriber device #1. The subscriber device #1 switches the wavelength used for communication in the own device to the notified wavelength in accordance with the notification received from the control device 20.

The control device 20 instructs the subscriber device #A on the wavelength determined in the step S702 via the control signal superimposer/extractor 14. At this time, when the control device 20 determines the signal parameters, the control device 20 may also notify the subscriber device #A of the determined signal parameters. Upon receiving the notification, the subscriber device #A transmits an ACK to the control device 20 in response to the received notification. The control device 20 receives the ACK from the subscriber device #A. The subscriber device #A switches the wavelength used for communication in its own device to the notified wavelength in accordance with the notification received from the control device 20 (step S703).

The optical SW manager 22 of the control device 20 switches connection between the input/output ports 131 of the optical SW #1 and connects the subscriber device #1 to the input/output port 131 corresponding to the optical path determined in the step S702. In addition, the optical SW manager 22 of the control device 20 switches connection between the input/output ports 131 of the optical SW #2 and connects the subscriber device #A to the input/output port 131 corresponding to the optical path determined in the step S702 (step S704).

Thereafter, the subscriber device #1 and the subscriber device #A start communication by a new optical path via the inside of the optical SW 13 and the optical communication network (step S705).

In the seventh operation example of the communication system constructed as described above, the optical path between the subscriber devices 11 can be changed in response to the operation of the optical path switch determiner 17. Specifically, the following is performed. In the communication system 100c, the control device 20 transmits a wavelength instruction to each subscriber device 11 via the control signal superimposer/extractor 14 in response to the fact that the optical path switch condition is satisfied. Therefore, in the communication system 100, even after the optical path between the subscriber devices 11 is established, the communication can be changed (the optical path is changed) in response to the operation of the optical path switch determiner 17.

Further, in the process of changing the optical path, it is not necessary to intentionally connect each subscriber device 11 (the subscriber device #1 and subscriber device #A) to the control port 132. Therefore, the optical path can be changed with a smaller amount of processing. As a result, the optical path can be changed in a shorter time, for example.

### (Modification Example of Operation)

Next, modification examples of each operation shown in Figs. 11 to 14 will be described. First, a modification example of the fourth operation example shown in Fig. 11 will be described.

The order of processing in the step S402 and the step S403 may be reverse. The processing of the step S405 may be performed before the step S402, before the step S403, or before the step S404. In the processing of each step, the ACK transmission and reception operations may be omitted. Further, the control device 20 may notify the subscriber device 11 that the optical path switch is to be executed later via the control signal superimposer/extractor 14 after the processing of the step S401 or the step S402. With this configuration, each subscriber device 11 can separate the main signal disconnection due to the switch of the optical SW in the step S403 from a failure (that is, determine that the main signal is not a failure).

In addition, in the transmission and reception of the control signal between the subscriber device #1 and the subscriber device #A, the in-band system performed within the overhead of the protocol may be used. Similarly, in the transmission and reception of the control signal between the subscriber device 11 and the control TRx 26, the in-band system to be performed within the overhead of the protocol may be used. Also, the above-mentioned in-band system may be adopted in a configuration in which the control signal is transmitted from the subscriber device 11 and received by the control TRx 26. As the in-band system, an area called GCC in the overhead for network monitoring in an OTN widely employed in a large capacity long-distance optical transmission network can be used. In such a configuration, those disclosed in the above-mentioned references may be applied to, for example.

Next, a modification example of the fifth operation example shown in Fig. 12 will be described. The order of processing in the step S502 and the step S503 may be reverse. In the processing of each step, the ACK transmission and reception operations may be omitted. Further, the control device 20 may notify the subscriber device 11 that the optical path switch is to be executed later via the control signal superimposer/extractor 14 after the processing of the step S501 or the step S502. With such a configuration, the subscriber device 11 (the subscriber device #A) can separate the main signal disconnection due to the switch of the optical SW #2 in the step S505 from a failure (that is, determine that the main signal is not a failure).

Next, a modification example of the sixth operation example shown in Fig. 13 will be described. The order of processing in the step S602 and the step S603 may be reverse. In addition, in the processing of each step, the ACK transmission and reception operations may be omitted. Further, the control device 20 may notify each subscriber device 11 that the optical path switch is to be executed later via the control signal superimposer/extractor 14 after the processing of the step S601 or the step S602. With this configuration, each subscriber device 11 can separate the main signal disconnection due to the switch of the optical SW in the step S603 from a failure (that is, determine that the main signal is not a failure).

Next, a modification example of the seventh operation example shown in Fig. 14 will be described. In the processing of each step, the ACK transmission and reception operations may be omitted. Further, the control device 20 may notify each subscriber device 11 that the optical path switch is to be executed later via the control signal superimposer/extractor 14 after the processing of the step S701 or the step S702. With this configuration, each subscriber device 11 can separate the main signal disconnection due to the switch of the optical SW in the step S704 from a failure (that is, determine that the main signal is not a failure).

For the instruction to the subscriber device #1 in the step S703, for example, the light emitted by the subscriber device #A may be used. More specifically, the AMCC signal indicating, for example, a wavelength instruction may be superimposed on the optical signal transmitted from the subscriber device #A. Such processing cannot be performed when a failure or the like occurs in the optical transmission line between the subscriber device #1 and the subscriber device #A.

For the instruction to the subscriber device #A in the step S703, for example, the light emitted by the subscriber device #1 may be used. More specifically, the AMCC signal indicating, for example, a wavelength instruction may be superimposed on the optical signal transmitted from the subscriber device #1. Such processing cannot be performed when a failure or the like occurs in the optical transmission line between the subscriber device #1 and the subscriber device #A.

### (Modification Example of Configuration)

Fig. 15 is a diagram showing a system configuration example of a modification example (a communication system 100d) of the communication system according to the second embodiment. The communication system 100d shown in Fig. 15 is configured to include the optical path switch determiner 17 in the communication system 100a shown in Fig. 7.

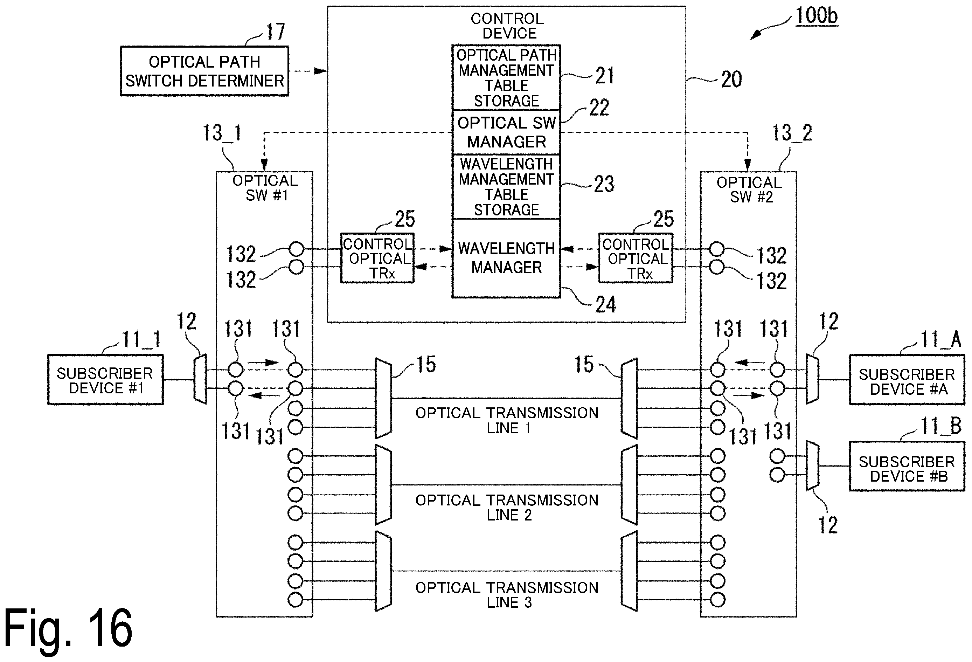

Fig. 16 is a diagram showing a system configuration example of a modification example (a communication system 100e) of the communication system according to the second embodiment. The communication system 100e shown in Fig. 16 is configured to include the optical path switch determiner 17 in the communication system 100b shown in Fig. 9.

The fourth operation example shown in Fig. 11 may be performed in the communication system 100d shown in Fig. 15 or in the communication system 100e shown in Fig. 16. The sixth operation example shown in Fig. 13 may be performed in the communication system 100d shown in Fig. 15 or in the communication system 100e shown in Fig. 16.

Even in each communication system (the communication system 100d and the communication system 100e) of modification examples related to these configurations, the same technical effect as that of the communication system 100 can be obtained when applied in the above-mentioned operation example.

Next, the operation of the optical path switch determiner 17 will be described in more detail. As described above, the optical path switch determiner 17 judges the connection destination switch condition and the optical path switch condition. As a concrete example of these conditions, there are cases where the conditions related to the accommodation switch for the backup path (the redundant path) are satisfied, the conditions related to the accommodation switch for load distribution are satisfied, an occurrence of a line failure, and the like. As concrete examples of these conditions, the processing for judging the conditions related to the line failure will be described in detail.

The line failure may be detected at the subscriber device 11. For example, the subscriber device 11 judges whether or not the received signal can be correctly decoded. When the decoding is not correctly performed, the subscriber device 11 judges that the line failure occurs. In this case, the subscriber device 11 may notify the control device 20 of the line failure through the control port 132. The subscriber device 11 may notify the optical path switch determiner 17 of the line failure. With such a configuration, it is possible to detect that the optical signal of sufficient intensity is inputted but sufficient reception sensitivity cannot be obtained due to the influence of noise or the like as the line failure.

In addition, there may be a configuration for detecting the line failure. A concrete example of such a configuration will be described with reference to Fig. 17. Fig. 17 is a diagram showing a concrete configuration for judging the line failure in the second embodiment shown in Fig. 10. In Fig. 17, the communication system 100c further includes an in-line type power monitor 18. In addition, the optical SW 13 further includes a power monitor 133. The in-line type power monitor 18 is provided for each line between the optical SW 13 and the wavelength multiplexer/demultiplexer 15. Each in-line type power monitor 18 outputs a signal indicating the intensity of the optical signal passing through the line provided with its own device to an optical path switch determiner 17. The power monitor 133 outputs the signal indicating the intensity of the optical signal passing through the optical SW 13 to the optical path switch determiner 17. For example, the power monitor 133 may output the signal indicating the intensity of the optical signal to the optical path switch determiner 17 for each input / output port 131.

The optical SW 13 may detect the line failure on the basis of the signal outputted from the power monitor 133. That is, the optical SW 13 may judge that the line failure occurs when the light receiving intensity of the optical signal received by the own device is lower than a threshold value on the basis of the signal outputted from the power monitor 133. The optical SW 13 may notify the optical path switch determiner 17 of the line failure.

The optical path switch determiner 17 may detect the line failure on the basis of the signal outputted from the in-line type power monitor 18. That is, the optical path switch determiner 17 may determine that the line failure occurs when the light receiving intensity of the optical signal is lower than the threshold value on the basis of the signal outputted from the in-line type power monitor 18. Note that the installation position of the in-line type power monitor 18 is not necessary to be limited to the installation position shown in Fig. 17. For example, the in-line type power monitor 18 may be installed between the subscriber device 11 and the optical SW 13. Note that in the case where a configuration capable of detecting the optical signal after demultiplexing the optical signal for each wavelength is adopted, the in-line type power monitor 18 may be installed in the middle of the optical transmission lines 1 to 3.

### [Industrial Applicability]

The present invention is applicable to an optical communication network using an optical SW.

### [Reference Signs List]

- 100, 100a, 100b: Communication system
- 11: Subscriber device
- 12: Wavelength filter
- 13: Optical SW
- 133: Power monitor
- 14: Control signal superimposer/extractor
- 141: Optical brancher
- 142: Optical modulator
- 15: Wavelength multiplexer/demultiplexer
- 16: Control signal extractor
- 17: Optical path switch determiner
- 18: In-line type power monitor
- 20: Control device
- 21: Optical path management table storage
- 22: Optical SW manager
- 23: Wavelength management table storage
- 24: Wavelength manager
- 25: Control optical TRx
- 26: Control TRx
- 261: Optical Rx
- 262: Tx

## Claims

1. A communication method performed by a communication system (100) comprising a plurality of optical switches (13) connecting an optical communication network and information equipment (11) and a control device (20) for controlling the plurality of optical switches (13), the communication method comprises:
in a state where first information equipment (11_1) and second information equipment (11_A) are communicatively connected via the plurality of optical switches (13) and the optical communication network,
switching, by an optical switch (13_1) to which the first information equipment (11_1) is connected, a connection of the first information equipment (11_1) from an input/output port (131) connected to the optical communication network to a control port (132) to which the control device (20) is connected in response to a predetermined operation of the first information equipment (11_1), the control device (20) allocating, to each information equipment (11_1, 11_A), a wavelength used for communication in response to a destination;
receiving, by the control device (20), from the first information equipment (11_1), information indicating third information equipment (11_B) that is a communication connection destination different from the second information equipment (11_A) via the control port (132) of the optical switch (13_1) to which the first information equipment (11_1) is connected;
allocating, by the control device (20), a wavelength used for communication to the first information equipment (11_1) and
the third information equipment (11_B) based on information indicating the third information equipment (11_B); and
connecting, by the control device (20), the first information equipment (11_1) to the third information equipment (11_B) so as to be communicable by controlling connection of an input/output port (131) of the plurality of optical switches (13),
wherein the predetermined operation is that the first information equipment (11_1) stops light emission to the optical switch (13_1) to which the first information equipment (11_1) is connected and starts the light emission to the optical switch (13_1) to which the first information equipment (11_1) is connected after at least a predetermined time has elapsed, and
the communication method further comprises:
transmitting, by the first information equipment (11_1), to the second information equipment (11_A) and the control device (20), a disconnection request before performing the predetermined operation;
stopping, by the first information equipment (11_1), as a part of the predetermined operation, the light emission to the optical switch (13_1) to which the first information equipment (11_1) is connected;
stopping, by the second information equipment (11_A), the light emission to an optical switch (13_2) to which the second information equipment (11_A) is connected in response to the disconnection request;
opening, by the control device (20), an input/output port (131) connected to the first information equipment (11_1) and an input/output port (131) connected to the second information equipment (11_A) in response to the stop of the light emission of the first information equipment (11_1) and the second information equipment (11_A); and
restarting, by the first information equipment (11_1), the light emission when at least a predetermined time elapses after the light emission to the optical switch (13_1) to which the first information equipment (11_1) is connected is stopped.

2. A communication system (100) comprising a plurality of optical switches (13) for connecting an optical communication network and information equipment (11), and a control device (20) for controlling the plurality of optical switches (13),
the control device (20) comprises:
in a state where first information equipment (11_1) and second information equipment (11_A) are communicatively connected via the plurality of optical switches (13) and the optical communication network,
an optical switch manager (22) configured to manage, in an optical switch (13_1) to which the first information equipment (11_1) is connected, so as to switch a connection of the first information equipment (11_1) from an input/output port (131) connected to the optical communication network to a control port (132) to which the control device (20) is connected in response to a predetermined operation of the first information equipment (11_1), the control device (20) is configured to allocate, to each information equipment (11_1, 11_A), a wavelength used for communication in response to a destination;
an optical receiver (261) configured to receive, from the first information equipment (11_1), information indicating third information equipment (11_B) that is a communication connection destination different from the second information equipment (11_A) via the control port (132) of the optical switch (13_1) to which the first information equipment (11_1) is connected; and
a wavelength manager (24) configured to allocate, by the control device (20), a wavelength used for communication to the first information equipment (11_1) and the third information equipment (11_B) based on information indicating the third information equipment (11_B), and
the optical switch manager (22) configured to connect the first information equipment (11_1) to the third information equipment (11_B) so as to be communicable by controlling connection of an input/output port (131) of the plurality of optical switches (13),
wherein the predetermined operation is that the first information equipment (11_1) stops light emission to the optical switch (13_1) to which the first information equipment (11_1) is connected and starts the light emission to the optical switch (13_1) to which the first information equipment (11_1) is connected after at least a predetermined time has elapsed,
the first information equipment (11_1) is configured to transmit, to the second information equipment (11_A) and the control device (20), a disconnection request before performing the predetermined operation,
the first information equipment (11_1) is after that configured to stop, as a part of the predetermined operation,
the light emission to the optical switch (13_1) to which the first information equipment (11_1) is connected,
the second information equipment (11_A) is configured to stop the light emission to an optical switch (13_2) to which the second information equipment (11_A) is connected in response to the disconnection request,
the control device (20) is configured to open an input/output port (131) connected to the first information equipment (11_1) and an input/output port (131) connected to the second information equipment (11_A) in response to the stop of the light emission of the first information equipment (11_1) and the second information equipment (11_A), and
the first information equipment (11_1) is configured to restart the light emission when at least a predetermined time elapses after the light emission to the optical switch (13_1) to which the first information equipment (11_1) is connected is stopped.

3. The communication system (100) according to claim 2, further comprising:
a branch device (141) configured to branch an optical signal outputted from the plurality of optical switches (13) to the optical communication network toward the control device (20), wherein
the predetermined operation is that the first information equipment (11_1) transmits information indicating that communication with the second information equipment (11_A) is terminated to the control device (20) via the branch device (141).

## Patentansprüche

1. Kommunikationsverfahren, das von einem Kommunikationssystem (100) durchgeführt wird, das eine Vielzahl von optischen Schaltern (13), die ein optisches Kommunikationsnetzwerk und eine Informationseinrichtung (11) verbinden, und eine Steuervorrichtung (20) zum Steuern der Vielzahl von optischen Schaltern (13) umfasst, wobei das Kommunikationsverfahren umfasst:
in einem Zustand, in dem eine erste Informationseinrichtung (11_1) und eine zweite Informationseinrichtung (11_A) über die Vielzahl von optischen Schaltern (13) und das optische Kommunikationsnetzwerk kommunikativ verbunden sind,
Schalten, durch einen optischen Schalter (13_1), an den die erste Informationseinrichtung (11_1) angeschlossen ist, einer Verbindung der ersten Informationseinrichtung (11_1) von einem mit dem optischen Kommunikationsnetzwerk verbundenen Eingangs-/Ausgangsanschluss (131) zu einem Steueranschluss (132), an den die Steuervorrichtung (20) angeschlossen ist, als Reaktion auf einen vorbestimmten Vorgang der ersten Informationseinrichtung (11_1), wobei die Steuervorrichtung (20) jeder Informationseinrichtung (11_1, 11_A) als Reaktion auf ein Ziel eine Wellenlänge zuweist, die für die Kommunikation verwendet wird;
Empfangen, durch die Steuervorrichtung (20) von der ersten Informationseinrichtung (11_1), von Informationen, die eine dritte Informationseinrichtung (11_B) anzeigen, die ein Kommunikationsverbindungsziel ist, das sich von der zweiten Informationseinrichtung (11_A) unterscheidet, über den Steueranschluss (132) des optischen Schalters (13_1), an den die erste Informationseinrichtung (11_1) angeschlossen ist;
Zuweisen einer Wellenlänge, die für die Kommunikation mit der ersten Informationseinrichtung (11_1) und der dritten Informationseinrichtung (11_B) verwendet wird, basierend auf Informationen, die die dritte Informationseinrichtung (11_B) anzeigen, durch die Steuervorrichtung (20); und
Verbinden der ersten Informationseinrichtung (11_1) mit der dritten Informationseinrichtung (11_B) durch die Steuervorrichtung (20), so dass durch das Steuern der Verbindung eines Eingangs-/Ausgangsanschlusses (131) der Vielzahl von optischen Schaltern (13) kommuniziert werden kann,
wobei der vorbestimmte Vorgang darin besteht, dass die erste Informationseinrichtung (11_1) die Lichtemission an den optischen Schalter (13_1), an den die erste Informationseinrichtung (11_1) angeschlossen ist, stoppt und die Lichtemission an den optischen Schalter (13_1), an den die erste Informationseinrichtung (11_1) angeschlossen ist, nach Ablauf mindestens einer vorbestimmten Zeit startet, und
wobei das Kommunikationsverfahren weiter umfasst:
Übertragen einer Trennungsanforderung durch die erste Informationseinrichtung (11_1) an die zweite Informationseinrichtung (11_A) und die Steuervorrichtung (20), bevor der vorbestimmte Vorgang durchgeführt wird;
Stoppen der Lichtemission an den optischen Schalter (13_1), an den die erste Informationseinrichtung (11_1) angeschlossen ist, durch die erste Informationseinrichtung (11_1) als Teil des vorbestimmten Vorgangs;
Stoppen der Lichtemission an einen optischen Schalter (13_2), an den die zweite Informationseinrichtung (11_A) angeschlossen ist, durch die zweite Informationseinrichtung (11_A) als Reaktion auf die Trennanforderung;
Öffnen eines mit der ersten Informationseinrichtung (11_1) verbundenen Eingangs-/Ausgangsanschlusses (131) und eines mit der zweiten Informationseinrichtung (11_A) verbundenen Eingangs-/Ausgangsanschlusses (131) durch die Steuervorrichtung (20) als Reaktion auf das Stoppen der Lichtemission der ersten Informationseinrichtung (11_1) und der zweiten Informationseinrichtung (11_A); und
Neustarten, durch die erste Informationseinrichtung (11_1), der Lichtemission, wenn mindestens eine vorbestimmte Zeit nach der Lichtemission an den optischen Schalter (13_1), an den die erste Informationseinrichtung (11_1) angeschlossen ist, verstrichen ist, gestopped wurde.

2. Kommunikationssystem (100), das eine Vielzahl von optischen Schaltern (13) zum Verbinden eines optischen Kommunikationsnetzwerks und einer Informationseinrichtung (11) sowie eine Steuervorrichtung (20) zum Steuern der Vielzahl von optischen Schaltern (13) umfasst,
wobei die Steuervorrichtung (20) umfasst:
in einem Zustand, in dem eine erste Informationseinrichtung (11_1) und eine zweite Informationseinrichtung (11_A) über die Vielzahl von optischen Schaltern (13) und das optische Kommunikationsnetzwerk kommunikativ verbunden sind,
einen optischen Schaltermanager (22), der so konfiguriert ist, dass er in einem optischen Schalter (13_1), an den die erste Informationseinrichtung (11_1) angeschlossen ist, eine Verbindung der ersten Informationseinrichtung (11_1) von einem mit dem optischen Kommunikationsnetzwerk verbundenen Eingangs-/Ausgangsanschluss (131) zu einem Steueranschluss (132), an den die Steuervorrichtung (20) angeschlossen ist, als Reaktion auf einen vorbestimmten Vorgang der ersten Informationseinrichtung (11_1) steuert, wobei die Steuervorrichtung (20) so konfiguriert ist, dass sie jeder Informationseinrichtung (11_1, 11_A) als Reaktion auf ein Ziel eine Wellenlänge zuweist, die für die Kommunikation verwendet wird;
einen optischen Empfänger (261), der so konfiguriert ist, dass er von der ersten Informationseinrichtung (11_1) Informationen, die eine dritte Informationseinrichtung (11_B) anzeigen, die ein Kommunikationsverbindungsziel ist, das sich von der zweiten Informationseinrichtung (11_A) unterscheidet, über den Steueranschluss (132) des optischen Schalters (13_1), an den die erste Informationseinrichtung (11_1) angeschlossen ist, empfängt; und
einen Wellenlängenmanager (24), der so konfiguriert ist, dass er durch die Steuervorrichtung (20) der ersten Informationseinrichtung (11_1) und der dritten Informationseinrichtung (11_B) eine Wellenlänge zuweist, die für die Kommunikation verwendet wird, basierend auf Informationen, die die dritte Informationseinrichtung (11_B) anzeigen, und
wobei der optische Schaltermanager (22) so konfiguriert ist, dass er die erste Informationseinrichtung (11_1) mit der dritten Informationseinrichtung (11_B) verbindet, sodass diese durch das Steuern der Verbindung eines Eingangs-/Ausgangsanschlusses (131) der Vielzahl von optischen Schaltern (13) miteinander kommunizieren können,
wobei der vorbestimmte Vorgang darin besteht, dass die erste Informationseinrichtung (11_1) die Lichtemission an den optischen Schalter (13_1), an den die erste Informationseinrichtung (11_1) angeschlossen ist, stoppt und die Lichtemission an den optischen Schalter (13_1), an den die erste Informationseinrichtung (11_1) angeschlossen ist, nach Ablauf mindestens einer vorbestimmten Zeit startet,
die erste Informationseinrichtung (11_1) so konfiguriert ist, dass sie eine Trennungsanforderung an die zweite Informationseinrichtung (11_A) und die Steuervorrichtung (20) überträgt, bevor sie die vorbestimmte Operation durchführt,
die erste Informationseinrichtung (11_1) danach so konfiguriert ist, dass sie als Teil des vorbestimmten Vorgangs die Lichtemission an den optischen Schalter (13_1), an den die erste Informationseinrichtung (11_1) angeschlossen ist, stoppt,
die zweite Informationseinrichtung (11_A) so konfiguriert ist, dass sie die Lichtemission an einen optischen Schalter (13_2), an den die zweite Informationseinrichtung (11_A) angeschlossen ist, als Reaktion auf die Trennungsanforderung stoppt,
die Steuervorrichtung (20) so konfiguriert ist, dass sie einen mit der ersten Informationseinrichtung (11_1) verbundenen Eingangs-/Ausgangsanschluss (131) und einen mit der zweiten Informationseinrichtung (11_A) verbundenen Eingangs-/Ausgangsanschluss (131) als Reaktion auf das Stoppen der Lichtemission der ersten Informationseinrichtung (11_1) und der zweiten Informationseinrichtung (11_A) öffnet, und
die erste Informationseinrichtung (11_1) so konfiguriert ist, dass sie die Lichtemission neu startet, wenn mindestens eine vorbestimmte Zeit nach dem Stoppen der Lichtemission an den optischen Schalter (13_1), an den die erste Informationseinrichtung (11_1) angeschlossen ist, verstrichen ist.

3. Kommunikationssystem (100) nach Anspruch 2, weiter umfassend:
eine Verzweigungsvorrichtung (141), die so konfiguriert ist, dass sie ein von der Vielzahl von optischen Schaltern (13) ausgegebenes optisches Signal an das optische Kommunikationsnetzwerk in Richtung der Steuervorrichtung (20) verzweigt, wobei
der vorbestimmte Vorgang darin besteht, dass die erste Informationseinrichtung (11_1) an die Steuervorrichtung (20) über die Verzweigungsvorrichtung (141) Informationen sendet, die anzeigen, dass die Kommunikation mit der zweiten Informationseinrichtung (11_A) beendet ist.

## Revendications

1. Procédé de communication réalisé par un système de communication (100) comportant une pluralité de commutateurs optiques (13) connectant un réseau de communication optique et des équipements d'informations (11) et un dispositif de commande (20) pour la commande de la pluralité de commutateurs optiques (13), le procédé de communication comporte :
dans un état où le premier équipement d'informations (11_1) et un deuxième équipement d'informations (11_A) sont connectés en communication par l'intermédiaire de la pluralité de commutateurs optiques (13) et du réseau de communication optique,
la commutation, par un commutateur optique (13_1) auquel le premier équipement d'informations (11_1) est connecté, d'une connexion du premier équipement d'informations (11_1) d'un port d'entrée/sortie (131) connecté au réseau de communication optique à un port de commande (132) auquel le dispositif de commande (20) est connecté en réponse à une opération prédéterminée du premier équipement d'informations (11_1), le dispositif de commande (20) allouant, à chaque équipement d'informations (11_1, 11_A), une longueur d'onde utilisée pour une communication en réponse à une destination ;
la réception, par le dispositif de commande (20), en provenance du premier équipement d'informations (11_1), d'informations indiquant un troisième équipement d'informations (11_B) qui est une destination de connexion de communication différente du deuxième équipement d'informations (11_A) par l'intermédiaire du port de commande (132) du commutateur optique (13_1) auquel le premier équipement d'informations (11_1) est connecté ;
l'allocation, par le dispositif de commande (20), d'une longueur d'onde utilisée pour une communication au premier équipement d'informations (11_1) et au troisième équipement d'informations (11_B) sur la base d'informations indiquant le troisième équipement d'informations (11_B) ; et
la connexion, par le dispositif de commande (20), du premier équipement d'informations (11_1) au troisième équipement d'informations (11_B) de façon à ce qu'ils soient aptes à communiquer par la commande de la connexion d'un port d'entrée/sortie (131) de la pluralité de commutateurs optiques (13),
dans lequel l'opération prédéterminée est que le premier équipement d'informations (11_1) arrête une émission de lumière vers le commutateur optique (13_1) auquel le premier équipement d'informations (11_1) est connecté et démarre l'émission de lumière vers le commutateur optique (13_1) auquel le premier équipement d'informations (11_1) est connecté après qu'au moins une durée prédéterminée s'est écoulée, et
le procédé de communication comporte en outre :
l'émission, par le premier équipement d'informations (11_1), vers le deuxième équipement d'informations (11_A) et le dispositif de commande (20), d'une requête de déconnexion avant la réalisation de l'opération prédéterminée ;
l'arrêt, par le premier équipement d'informations (11_1), dans le cadre de l'opération prédéterminée, de l'émission de lumière vers le commutateur optique (13_1) auquel le premier équipement d'informations (11_1) est connecté ;
l'arrêt, par le deuxième équipement d'informations (11_A), de l'émission de lumière vers un commutateur optique (13_2) auquel le deuxième équipement d'informations (11_A) est connecté en réponse à la requête de déconnexion ;
l'ouverture, par le dispositif de commande (20), d'un port d'entrée/sortie (131) connecté au premier équipement d'informations (11_1) et d'un port d'entrée/sortie (131) connecté au deuxième équipement d'informations (11_A) en réponse à l'arrêt de l'émission de lumière du premier équipement d'informations (11_1) et du deuxième équipement d'informations (11_A) ; et
le redémarrage, par le premier équipement d'informations (11_1), de l'émission de lumière lorsqu'au moins une durée prédéterminée s'est écoulée après que l'émission de lumière vers le commutateur optique (13_1) auquel le premier équipement d'informations (11_1) est connecté a été arrêtée.

2. Système de communication (100) comportant une pluralité de commutateurs optiques (13) pour la connexion d'un réseau de communication optique et d'équipements d'informations (11), et un dispositif de commande (20) pour la commande de la pluralité de commutateurs optiques (13),
le dispositif de commande (20) comporte :
dans un état où le premier équipement d'informations (11_1) et un deuxième équipement d'informations (11_A) sont connectés en communication par l'intermédiaire de la pluralité de commutateurs optiques (13) et du réseau de communication optique,
un gestionnaire de commutateur optique (22) configuré pour effectuer une gestion, dans un commutateur optique (13_1) auquel le premier équipement d'informations (11_1) est connecté, de façon à commuter une connexion du premier équipement d'informations (11_1) d'un port d'entrée/sortie (131) connecté au réseau de communication optique à un port de commande (132) auquel le dispositif de commande (20) est connecté en réponse à une opération prédéterminée du premier équipement d'informations (11_1), le dispositif de commande (20) est configuré pour allouer, à chaque équipement d'informations (11_1, 11_A), une longueur d'onde utilisée pour une communication en réponse à une destination ;
un récepteur optique (261) configuré pour recevoir, en provenance du premier équipement d'informations (11_1), des informations indiquant un troisième équipement d'informations (11_B) qui est une destination de connexion de communication différente du deuxième équipement d'informations (11_A) par l'intermédiaire du port de commande (132) du commutateur optique (13_1) auquel le premier équipement d'informations (11_1) est connecté ; et
un gestionnaire de longueur d'onde (24) configuré pour allouer, par le dispositif de commande (20), une longueur d'onde utilisée pour une communication au premier équipement d'informations (11_1) et au troisième équipement d'informations (11_B) sur la base d'informations indiquant le troisième équipement d'informations (11_B) ; et
le gestionnaire de commutateur optique (22) configuré pour connecter le premier équipement d'informations (11_1) au troisième équipement d'informations (11_B) de façon à ce qu'ils soient aptes à communiquer par la commande de la connexion d'un port d'entrée/sortie (131) de la pluralité de commutateurs optiques (13),
dans lequel l'opération prédéterminée est que le premier équipement d'informations (11_1) arrête une émission de lumière vers le commutateur optique (13_1) auquel le premier équipement d'informations (11_1) est connecté et démarre l'émission de lumière vers le commutateur optique (13_1) auquel le premier équipement d'informations (11_1) est connecté après qu'au moins une durée prédéterminée s'est écoulée,
le premier équipement d'informations (11_1) est configuré pour émettre, vers le deuxième équipement d'informations (11_A) et le dispositif de commande (20), une requête de déconnexion avant la réalisation de l'opération prédéterminée,
le premier équipement d'informations (11_1) est, après cela, configuré pour arrêter, dans le cadre de l'opération prédéterminée, l'émission de lumière vers le commutateur optique (13_1) auquel le premier équipement d'informations (11_1) est connecté ;
le deuxième équipement d'informations (11_A) est configuré pour arrêter l'émission de lumière vers un commutateur optique (13_2) auquel le deuxième équipement d'informations (11_A) est connecté en réponse à la requête de déconnexion,
le dispositif de commande (20) est configuré pour ouvrir un port d'entrée/sortie (131) connecté au premier équipement d'informations (11_1) et un port d'entrée/sortie (131) connecté au deuxième équipement d'informations (11_A) en réponse à l'arrêt de l'émission de lumière du premier équipement d'informations (11_1) et du deuxième équipement d'informations (11_A), et
le premier équipement d'informations (11_1) est configuré pour redémarrer l'émission de lumière lorsqu'au moins une durée prédéterminée s'est écoulée après que l'émission de lumière vers le commutateur optique (13_1) auquel le premier équipement d'informations (11_1) est connecté a été arrêtée.

3. Système de communication (100) selon la revendication 2, comportant en outre :
un dispositif de ramification (141) configuré pour ramifier un signal optique délivré en sortie de la pluralité de commutateurs optiques (13) au réseau de communication optique vers le dispositif de commande (20), dans lequel
l'opération prédéterminée est que le premier équipement d'informations (11_1) émet des informations indiquant qu'une communication avec le deuxième équipement d'informations (11_A) est terminée vers le dispositif de commande (20) par l'intermédiaire du dispositif de ramification (141).
